# EUROPEAN PATENT APPLICATION

(11) **EP 4 470 757 A1**
(43) Date of publication of application: **04.12.2024**
(21) Application number: 22921758.3
(22) Date of filing: 29.12.2022
(51) Int. Cl.: B29C 64/379, B29C 64/30, B29C 64/20

(54) **3D PRINTING SYSTEM, RACK AND DEMOLDING DEVICE**

(30) Priority: 24.01.2022 CN 202220189811 U; 24.01.2022 CN 202210080329; 24.01.2022 CN 202210081922
(71) Applicant: Shenzhen Creality 3D Technology Co., Ltd., Shenzhen, Guangdong 518110 (CN)
(72) Inventor: CHEN, Chun, Shenzhen, Guangdong 518110 (CN); CHEN, Shuquan, Shenzhen, Guangdong 518110 (CN); CHEN, Xiaochan, Shenzhen, Guangdong 518110 (CN)
(74) Representative: Zaboliene, Reda
(86) International application number: PCT/CN2022/143173
(87) International publication number: WO 2023/138338

(57) **Abstract**

The present invention relates to a 3D printing system, and a rack and a demolding device which are applied to the 3D printing system. The 3D printing system comprises the rack, a release film replacement device, a light source assembly and a base assembly. The release film replacement device can replace a used release film. The light source assembly is arranged above the release film replacement device and is connected to the release film replacement device. The light source assembly is used for emitting light. The base assembly is arranged on the side of the release film replacement device away from the light source assembly. The base assembly is connected to the rack, and comprises a material container and a forming platform. The material container is used for bearing a printing material. The forming platform enables the printing material to be light-cured on the upper surface of the forming platform so as to form a model by means of layer-by-layer molding. Since the release film is arranged above the forming platform, the release film does not need to bear the weight of the printing material and the printing model, and is not prone to deformation. When the forming platform moves away from the release film, the forming platform only applies a small tug force on the release film. When the release film needs to be replaced, the release film can be replaced by using the release film replacement device.

## Description

### FIELD

The present disclosure relates to a technical field of 3D printing, particularly to a 3D printing system, a rack, and a demolding device.

### BACKGROUND

With the development of 3D printing technology, LCD light-curing 3D printing technology has emerged. In the existing LCD light-curing 3D printing device, a forming platform is provided into the print material inside of a printer slot, and the print material is irradiated by a light source through the printer slot. The printing material is light cured layer by layer between a release film and the forming platform, and the desired molding model is formed on the forming platform.

In the existing technology, the release film is arranged below the forming platform, and the release film is a monolithic structure, and the release film is fastened to a screen assembly by screws. When the print material is molded layer by layer between the forming platform and the release film, the forming platform moves upward and then moves away from the release film, allowing the model to be separated from the upper surface of the release film. However, due to the photosensitive resin in the light-curing molding process, separation of the release film from the surface of the model is required for each layer of printing. The release film can be easily worn and tear, therefore, needs to be frequently replaced. The disassembly process of the screen assembly is also cumbersome, and the entire replacement process of replacing the release film is time-consuming and labor-intensive.

### SUMMARY

The present invention discloses a 3D printing system, a rack, and a demolding device, to solve problems of that release film is easy to be wear and tear, the frequency of replacement of the release film is high, the disassembly process of the release film is cumbersome, and the entire replacement process is more time-consuming and labor-intensive.

A 3D printing system, including: a rack; a release film replacement device including a winding assembly; the winding assembly includes a first reel and a second reel; the first reel and the second reel are provided opposite to each other and at intervals, and the first reel and the second reel are rotatably connected to the rack, the first reel is configured to wind a first end of the release film, the second reel is configured to wind a second end of the release film; when the second reel rotates around its own axis in a first direction, the first end of the release film is unwound from the first reel, and the second end of the release film is wound on the second reel; a light source assembly, the light source assembly is provided above the release film replacement device, and the light source assembly is connected to the release film replacement device, the light source assembly is configured to emit light; a base assembly, the base assembly is arranged at a side of the release film replacement device away from the light source assembly, and the base assembly is connected to the rack, the base assembly includes a material container and a forming platform; the material container is configured to bearing printing material; the forming platform is movably connected to the rack, and the forming platform can move up and down in the material container; the forming platform enables the printing material to be light-cured on the upper surface of the forming platform so as to form a model.

In one embodiment, the winding assembly further includes a first fixing plate, the first fixing plate is connected to the rack, and the first reel and the second reel are mounted on a same side of the first fixing plate; the second end of the release film is able to pass over an edge of the first fixing plate and pass through a side of the first fixing plate that is back from the first reel, to be wound on the second reel.

In one embodiment, the release film replacement device further includes a pression assembly, the pression assembly is arranged at a side of the release film away from the winding assembly, and the pression assembly is connected to the first fixing plate, the pression assembly is capable of moving away from or close to the release film; when the pression assembly is moved away from the release film, the pression assembly is capable of controlling the winding assembly, making the second reel to rotate around its own axis in the first direction.

In one embodiment, the pression assembly includes a pression frame, the release film replacement device further includes a first drive assembly, the first drive assembly is mounted on the first fixing plate, and the first drive assembly is connected to the pression frame; the first drive assembly is configured to drive the pression frame to move close to or farther away from the release film.

In one embodiment, the first drive assembly includes a first drive member, a first screw nut, and a first lifting screw rod; the first drive member is mounted on the first fixing plate, the first screw nut is fixedly connected to the pression frame, an end of the first lifting screw rod is connected to an output end of the first drive member, another end of the first lifting screw rod penetrates the first fixing plate and is threaded to the first screw nut, the first drive member is configured to drive the first lifting screw rod to rotate around an axis of the first lifting screw rod, to make the pression frame move close to or farther away from the release film.

In one embodiment, the first drive assembly further includes a guide member, the guide member is connected between the first fixing plate and the pression frame, and the pression frame is slidingly connected with the guide member, when the pression frame moves close to or farther away from the release film, the pression frame is capable of sliding relative to the guide member.

In one embodiment, the release film replacement device further includes a second drive assembly, the second drive assembly is mounted on the first fixing plate, and the second drive assembly is connected to one end of the second reel, the second drive assembly is capable of driving the second reel to rotate around an axis of the second reel in the first direction.

In one embodiment, the 3D printing system further includes a model separate assembly, the model separate assembly is connected to the base assembly, the model separate assembly includes a third connecting plate, a scraper is provided on a side of the third connecting plate close to the forming platform, when the forming platform moves to a predetermined position in a height direction of the rack, the third connecting plate is capable of driving the scraper to be inserted between the upper surface of the forming platform and the model, and move along a width direction of the forming platform, the model is gradually separated from the forming platform during the movement of the scraper.

In one embodiment, the upper surface of the forming platform is provided with groove in a thickness direction of the forming platform, and the groove extends in a width direction of the forming platform, the scraper is capable of being inserted into the groove and moving in an extension direction of the groove.

In one embodiment, the model separate assembly further includes a third sliding rail and a third sliding block, the third sliding rail is connected to the base assembly, and the third sliding rail extends in the width direction of the forming platform, the third sliding block is slidably connected to the third sliding rail, and the third connecting plate is fixedly connected to the third sliding block, the third connecting plate is capable of being moved along an extension direction of the third sliding rail under a driving of the third sliding block.

In one embodiment, the 3D printing system further includes a model push assembly, the model push assembly is connected to the base assembly, the model push assembly includes a push plate, the push plate is provided on a side of the third connecting plate away from the scraper; when the model is separated from the forming platform, the push plate is capable of moving in the width direction of the forming platform and push the model away from the forming platform.

In one embodiment, the model push assembly includes a first mounting plate, a fourth sliding rail, and a fourth sliding block; the first mounting plate is connected to the base assembly, the fourth sliding rail is mounted on a side of the first mounting plate close to the forming platform, and the fourth sliding rail extends in the width direction of the forming platform; the fourth sliding block is slidably connected to the fourth sliding rail, the push plate is fixedly connected to the fourth sliding block, the push plate is capable of moving along the width direction of the forming platform under a driving of the fourth sliding block, and push the model away from the forming platform.

In one embodiment, the material container includes a storage chamber, the push plate is capable of pushing the model into the storage chamber.

In one embodiment, the rack includes a basal plate and a first sliding assembly, the basal plate is connected to the base assembly; the first sliding assembly includes a first sliding block; the first sliding block is slidingly connected to the basal plate, the first sliding block is fixedly connected to the light source assembly; the first sliding block is capable of driving the light source assembly and the release film replacement device to move close to or farther away from the base assembly.

In one embodiment, the first sliding assembly further includes a first sliding rail and a third drive, the first sliding rail is fixedly connected to the basal plate, and the first sliding rail extends in a height direction along the basal plate; the first sliding block is slidably connected to a side of the first sliding rail away from the basal plate; the third drive member is fixedly connected to the basal plate, and a power output end of the third drive member is connected to the first sliding block, the third drive member is configured to drive the first sliding block to slide along an extension direction of the first sliding rail.

In one embodiment, the rack further includes a second sliding assembly, the second sliding assembly includes a second sliding block, the second sliding block is spaced apart from the first sliding block and is slidingly connected to the basal plate, the second sliding block is configured to be fixedly connected to the forming platform; the second sliding block is capable of driving the forming platform to move close to or farther away from a bottom wall of the material container.

In one embodiment, the second sliding assembly further includes a second sliding rail and a fourth drive, the second sliding rail is spaced apart from the first sliding rail and fixedly connected to the basal plate, the second sliding rail extends in the height direction of the basal plate; the second sliding block is slidably connected to a side of the second sliding rail back from the basal plate; the fourth drive member is fixedly connected to the basal plate, and a power output end of the fourth drive member is connected to the second sliding block, the fourth drive member is configured to drive the second sliding block to slide along the extension direction of the second sliding rail.

The present invention has following beneficial effects:
The present invention provides the 3D printing system in which unused release film is wound on the first reel, and used release film is wound on the second reel. Since the release film is provided above the forming platform, when the printing material in the material container is molded layer by layer between the release film and the forming platform during the printing process, the forming platform moves downwardly and thus moves away from the release film, so that the printed model is separated from the lower surface of the release film. As the release film in the printing process does not need to carry the gravity of the printing material and the gravity of the printed model, so the release film is not easy to deform; and when the model moves downward with the forming platform away from the release film, a pulling force on the release film is small, the release film is not easy to be damaged. When the release film needs to be replaced, the second reel rotates around its own axis in the first direction, so that the first end of the release film is unwound on the first reel, and the second end of the release film is wound on the second reel, which makes the used release film between the first reel and the second reel to be replaced with the unused release film on the first reel. The whole operation process of replacing the release film is simple and convenient, and is time-saving and labor-saving, avoiding the processes of disassembling and assembling the screen assembly.

### BRIEF DESCRIPTION OF THE DRAWINGS

FIG. 1 is a schematic drawing of a 3D printing system according to an embodiment of the present disclosure.
FIG. 2 is a schematic drawing of the 3D printing system in FIG. 1.
FIG. 3 is an explosion view of the 3D printing system in FIG. 1.
FIG. 4 is a schematic drawing of a release film replacement device in the 3D printing system of FIG. 1.
FIG. 5 is an explosion view of the release film replacement device in FIG. 4.
FIG. 6 is top plan view of the release film replacement device in FIG. 4.
FIG. 7 is a cross-section view of the release film replacement device of FIG. 6 in A-A direction.
FIG. 8 is an enlarged view of the release film replacement device of FIG. 7 in part B.
FIG. 9 is an enlarged view of the release film replacement device of FIG. 7 in part C.
FIG. 10 is a schematic drawing of a screen spacer, a screen compression block, and a glass supporting plate in the release film replacement device of FIG. 4.
FIG. 11 is a schematic drawing of a pression assembly in the release film replacement device of FIG. 4 moving close to the release film.
FIG. 12 is a schematic drawing of a pression assembly in the release film replacement device of FIG. 4 moving away from the release film.
FIG. 13 is a schematic drawing of a rack in the 3D printing system of FIG. 1.
FIG. 14 is an explosion view of the rack in FIG. 13.
FIG. 15 is a schematic drawing of a model separate assembly in the 3D printing system of FIG. 1.
FIG. 16 is an explosion view of the model separate assembly in FIG. 15.
FIG. 17 is a schematic drawing of a model push assembly in the 3D printing system of FIG. 1.
FIG. 18 is an explosion view of the model push assembly in FIG. 17.
FIG. 19 is a schematic drawing of a base assembly in the 3D printing system of FIG. 1.
FIG. 20 is an explosion view of the base assembly in FIG. 19.
FIG. 21 is a schematic drawing of a forming platform in the 3D printing system of FIG. 1.
FIG. 22 is a schematic drawing of a light source assembly in the 3D printing system of FIG. 1.
FIG. 23 is an explosion of the light source assembly in FIG. 22.

### Description of main components or elements:

100-release film replacement device; 110-winding assembly; 111-first reel; 112-second reel; 113-first fixing plate; 114-supporting arm; 1141-first coupling slot; 115-mounting clamp; 1151-second coupling slot; 120-pression assembly; 121-pression frame; 1211-connecting hole; 122-silicone ring; 123-positioning pin; 130-first drive assembly; 131-first drive member; 132-first lifting screw rod; 133-first driving synchronous wheel; 134-first driven synchronous wheel; 135-first synchronous belt; 136-bearing seat; 137-guide column; 1371-limiting portion; 138-first fixing seat; 139-fisrt screw nut; 1391-bearing; 140-second drive assembly; 141-second drive member ; 142-second driving synchronous wheel; 143-second driven synchronous wheel; 144-second synchronous belt; 145-second fixing seat; 150-screen assembly; 151-printing screen; 1511-screen mounting plate; 152-screen cushion; 1521-second mounting groove; 153-screen compression block; 1531-third mounting groove; 154-glass supporting plate; 155-PVC plate; 156-first connecting member; 160-release film; 161-unused release film; 162-used release film;

200-rack; 210-basal plate; 211-first mounting plate; 212-second mounting plate; 2121-sliding groove; 213-profile mounting plate; 220-first sliding assembly; 221-first sliding block; 222-first sliding rail; 223-third drive member; 224-first fixing block; 225-second lifting screw rod; 226-first coupling; 227-second screw nut; 230-second sliding assembly; 231-second sliding block; 232-second sliding rail; 233-fourth drive member; 234-second fixing block; 235-third lifting screw rod; 236-second coupling; 237-third screw nut; 238-first mounting block; 239-second mounting block; 240-first limiting member; 250-second limiting member; 251-third fixing seat; 260-second connecting member 260; 261-first connecting plate; 262-second connecting plate;

300-base assembly; 310-material container; 311-storage chamber; 320-forming platform; 321-groove; 3211-through hole; 330-supporting plate; 340-base plate; 351-profile; 352-profile fixing plate; 353-profile fixing reinforcement; 360-flame retardant combined power switch; 370-adjustable support foot cup;

400-model separate assembly; 410-third connecting plate; 411-scraper; 420-third sliding rail; 430-third sliding block; 440-fifth drive member; 441-drive member fixing seat; 450-reciprocating screw rod; 460-fourth screw nut; 471-third driving synchronous wheel; 472-third driven synchronous wheel; 473-tensioning wheel; 4731-tensioning wheel fixing seat; 4732-rotating member; 4733-locking member; 474-third synchronous belt; 475-first bearing; 481-bearing fixing seat; 482-fourth connecting plate; 483-second fixing plate; 491-third limiting member; 492-fourth limiting member;

500-model push assembly; 510-push plate; 520-first mounting plate; 530-fourth sliding rail; 540-fourth sliding block; 550-sixth drive member; 561-mounting shaft; 562-fourth driving synchronous wheel; 563-second bearing; 564-fourth synchronous belt; 570-third fixing plate; 580-fourth fixing plate;

600-light source assembly; 610-second fixing plate; 621- light source assembly cover; 622-light shield; 623-support rod; 624-isolation column; 625-heat sink; 631-main board; 632-touch screen; 641-lamp panel; 642-lens holder; 643-lens.

### DETAILED DESCRIPTION

In order to make the technical problems solved, technical solutions, and technical effects achieved by the present invention clearer, the technical solutions of the present invention are further described below in conjunction with the accompanying drawings and embodiments.

In the description of the present invention, terms "center", "longitudinal", "lateral", "length ", "width", "thickness", "top", "bottom", "front", "back", "left", "right", "vertical", "horizontal", "top", "bottom", "inside", "outer", "clockwise", "counterclockwise", "axial", "radial", "circumferential", etc. indicate orientation or positional relationships based on those shown in the accompanying drawings, and are intended only to facilitate the description of the present invention and to simplify the description, and are not intended to indicate or imply that the device or element referred to have a particular orientation, and be constructed and operated in a particular orientation. Therefore, it cannot be construed as a limitation of the present invention.

In addition, a feature defined as "first" or "second" may expressly or impliedly include one or more of such features for the purpose of distinguishing the descriptive features, in no order and without distinction of importance. In the description of the present invention, unless otherwise specified, "more than one" means two or more.

In the description of the present invention, unless otherwise expressly specified and limited, the terms "mounted", "coupled", "connected" are to be broadly construed, for examples, it can be a fixed connection or a detachable connection, it may be a fixed connection, a removable connection, or a connection in one piece, it may be a mechanical connection or an electrical connection, it may be a direct connection or an indirect connection through an intermediate medium, and it may be a connection within the two elements. For a person of ordinary skill in the art, the specific meaning of the above terms in the present invention may be understood in specific cases.

In the present invention, unless expressly provided and limited, the first feature being "above" or "below" the second feature may be a direct contact between the first and second features, or an indirect contact between the first and second features through an intermediate medium. Furthermore, the first feature being "above", "upon" and "on" the second feature may be that the first feature is directly above or diagonally above the second feature, or the first feature is horizontally higher than the second feature. The first feature is "below", "under" and "underneath" the second feature may be that the first feature is directly below or diagonally below the second feature, or the first feature is less horizontal than the second feature.

It should be noted that when an element is described to be "fixed to" or "set on" another element, it may be directly on the other element or there may be an intermediate element. When an element is described to be "attached" to another element, it may be directly attached to the other element or there may be indirect connecting elements. The terms "vertical", "horizontal", "top", "bottom", "left," "right," and similar expressions are used herein for illustrative purposes only and are not intended to be the exclusive means of implementation.

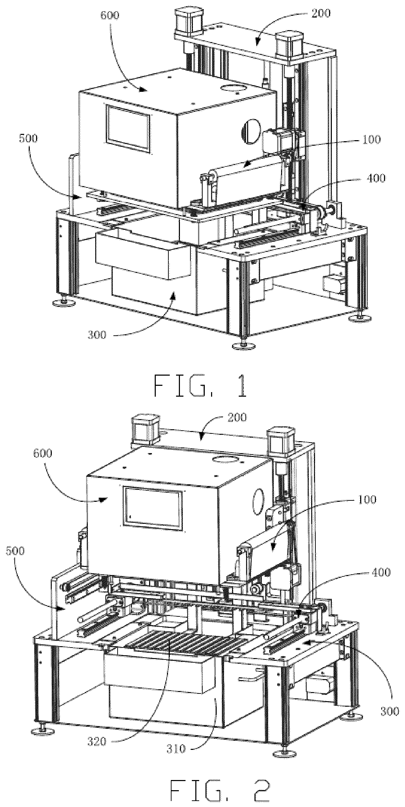

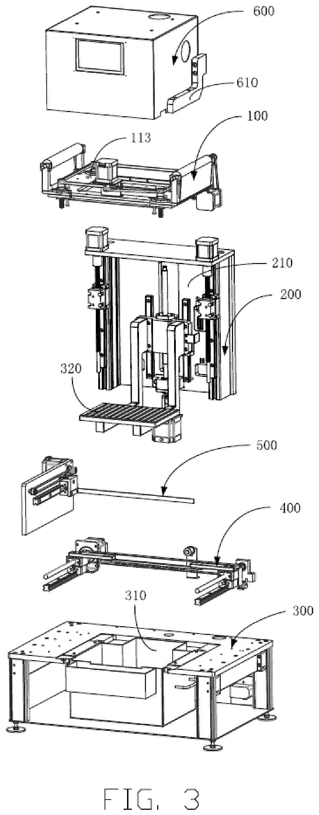

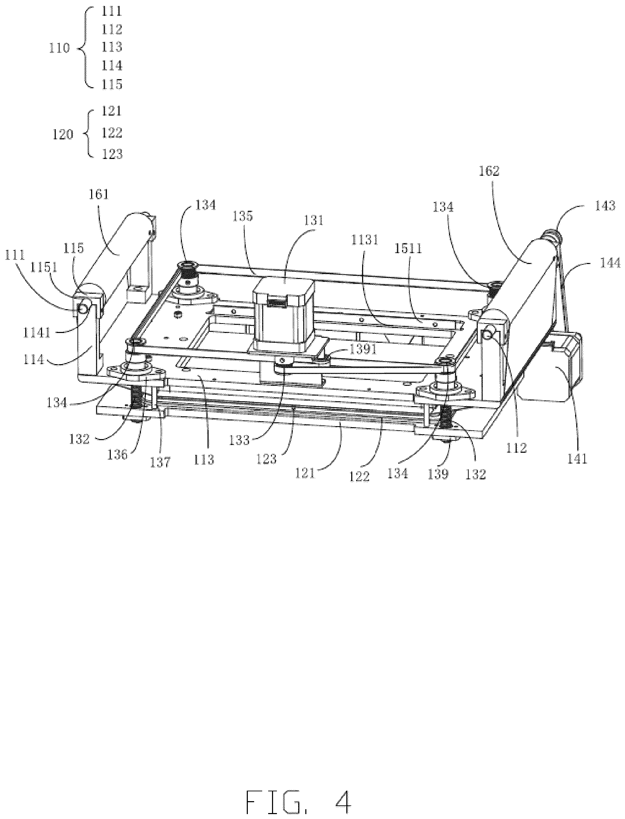

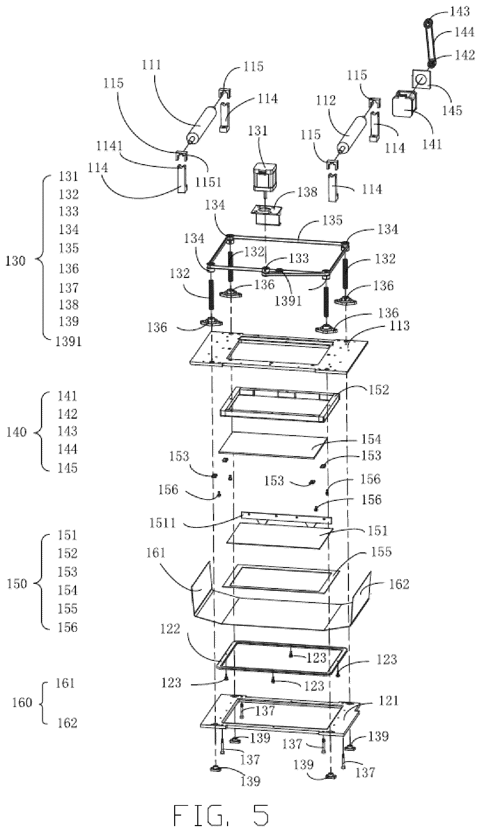

Referring to FIG. 1 to FIG. 5, FIG. 1 is a schematic drawing of a 3D printing system according to an embodiment of the present disclosure. FIG. 2 is another schematic drawing of the 3D printing system in FIG. 1. FIG. 3 is an explosion view of the 3D printing system in FIG. 1. FIG. 4 is a schematic drawing of a release film replacement device in the 3D printing system of FIG. 1. FIG. 5 is an explosion view of the release film replacement device in FIG. 4.

An embodiment of the present invention discloses a 3D printing system. The 3D printing system includes a rack 200, a release film replacement device 100, a first mobile assembly, and a base assembly 300. The release film replacement device 100 includes a winding assembly 100. The winding assembly 100 includes a first reel 111 and a second reel 112. The first reel 111 and the second reel 112 are provided opposite to each other and at intervals, and the first reel 111 and the second reel 112 are rotatably connected to the rack 200. The first reel 111 is configured to wind a first end of the release film 160, the second reel 112 is configured to wind a second end of the release film 160. When the second reel 112 rotates around an axis of the second reel 112 in a first direction, the first end of the release film 160 is unwound from the first reel 111, and the second end of the release film 160 is wound on the second reel 112. The first direction is an anti-clockwise direction in FIG. 4. The first mobile assembly is a light source assembly 600. The light source assembly 600 is provided above the release film replacement device 100, and the light source assembly 600 is connected to the release film replacement device 100. The light source assembly 600 is configured to emit light. The base assembly 300 is arranged at a side of the release film replacement device 100 away from the light source assembly 600, and the base assembly 300 is connected to the rack 200. The base assembly 300 includes a material container 310 and a forming platform 320. The material container 310 is configured to bearing printing material. The forming platform 320 is movably connected to the rack 200, and the forming platform 320 can move up and down in the material container 310. The forming platform 320 enables the printing material to be light-cured layer by layer on an upper surface of the forming platform 320 to form a model. The light source assembly 600 is one embodiment of the first mobile assembly. In other embodiments, the first mobile assembly may be a structure such as an engraving assembly, which may replace the light source assembly 600.

When the 3D printing system printing the model, unused release film 161 is wound on the first reel 111, used release film 162 is wound on the second reel 112. Since the release film 160 is provided above the forming platform 320, when the printing material in the material container 310 is molded layer by layer between the release film 160 and the forming platform 320 during the printing process, the forming platform 320 moves downwardly and thus moves away from the release film 160, so that the printed model is separated from a lower surface of the release film 160. As the release film 160 in the printing process does not need to carry the gravity of the printing material and the gravity of the printed model, so the release film 160 is not easy to deform. When the printed model moves downward with the forming platform 320 away from the release film 160, a pulling force on the release film 160 is small, the release film 160 is not easy to be damaged. When the release film 160 needs to be replaced, the second reel 112 rotates around the axis of the second reel 112 in the first direction, so that the first end of the release film 160 is unwound on the first reel 111, and the second end of the release film 160 is wound on the second reel 112, which makes the release film 160 between the first reel 111 and the second reel 112 to be replaced with the unused release film 161 on the first reel 111. The whole operation process of replacing the release film is simple and convenient, and is time-saving and labor-saving, avoiding the processes of disassembling and assembling the screen assembly.

In some embodiments, the printing material is a liquid photosensitive resin. The liquid photosensitive resin is light cured and molded into the model layer by layer between the forming platform 320 and the release film 160 under irradiation of a UV light source.

In other embodiments, the printing material is a zirconia ceramic slurry. The zirconia ceramic slurry is cured between the forming platform 320 and the release film 160 under the irradiation of a UV light source to obtain a zirconia ceramic embryo, and then the obtained zirconia ceramic embryo is finally degreased and sintered in sections to obtain the 3D-printed model of a ceramic material. In one embodiment, percentage content of each component in the zirconia ceramic slurry is: zirconia powder is 90~94wt%, dispersant is 1.5-2.5%, photoinitiator is 0.6~1%, and the remaining is a premix. The dispersant may be any one of DISPERBYK-110, DISPERBYK-W969, DISPERBYK-2020. The photoinitiator may be phenylbis (2,4,6-trimethylbenzoyl) phosphine oxide (TPO).

In other embodiment, the printing material may be other types of ceramic materials, such as metal-tin-reinforced nano TiOz light-curing 3D printing ceramic slurry, 3D printing piezoelectric ferroelectric ceramic slurry, etc., without any limitation thereon. The printing material may be adapted to change according to material requirements of the 3D model to be printed. When 3D printing is performed by the 3D printing system of the present invention, 3D printing of conventional photosensitive resin materials and 3D printing of ceramic materials can be achieved.

In one embodiment, user is able to manually rotate the second reel 112 around the axis of the second reel 112 in the first direction. In other embodiments, the second reel 112 can be driven by a motor or a rotary cylinder to rotate around the axis of the second reel 112 in the first direction.

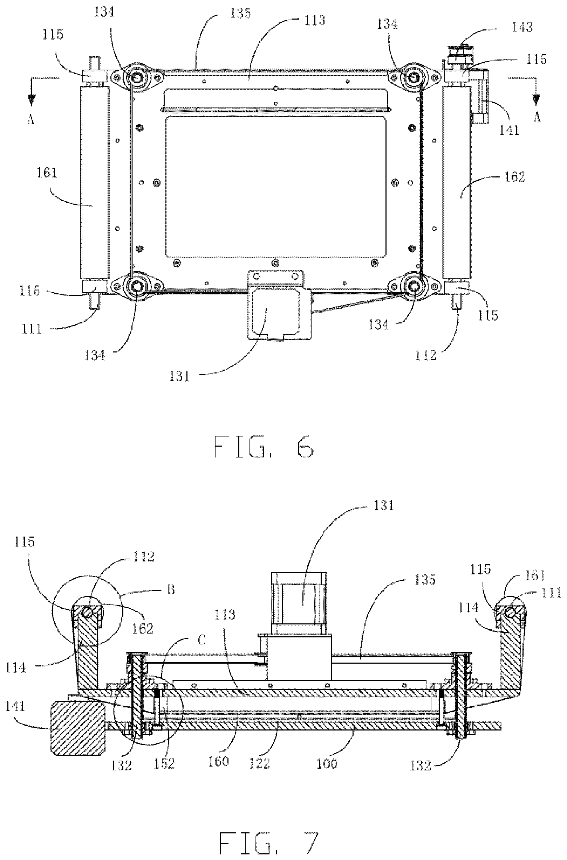

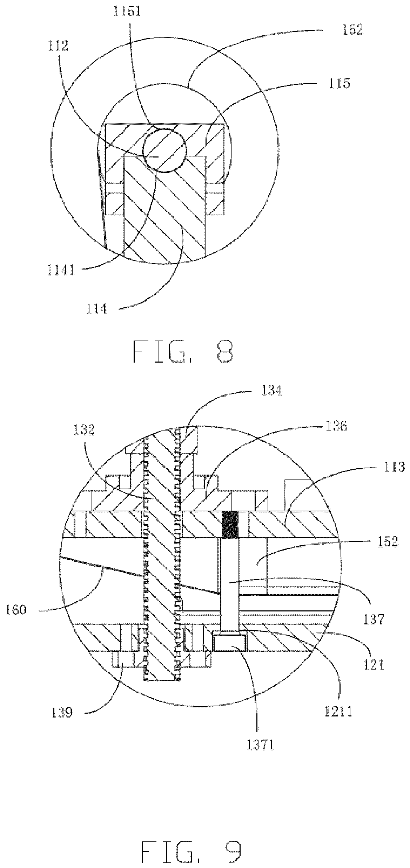

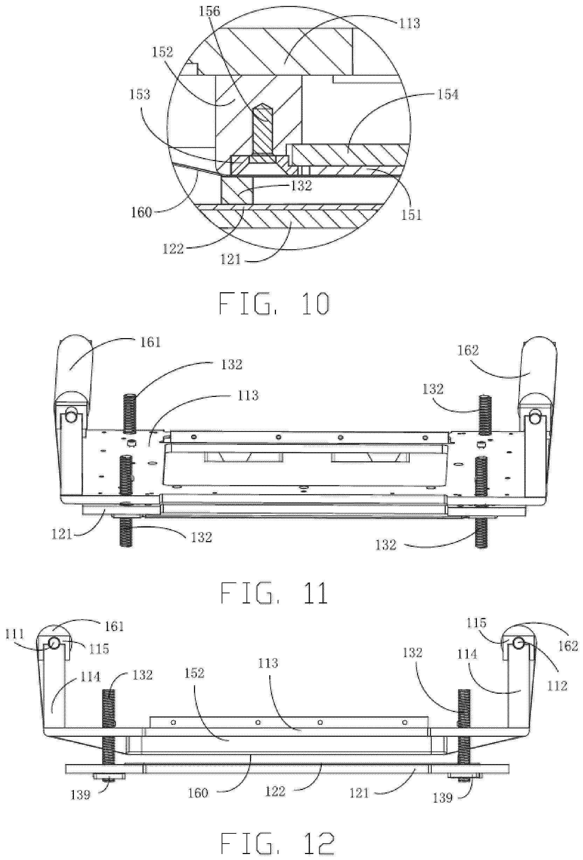

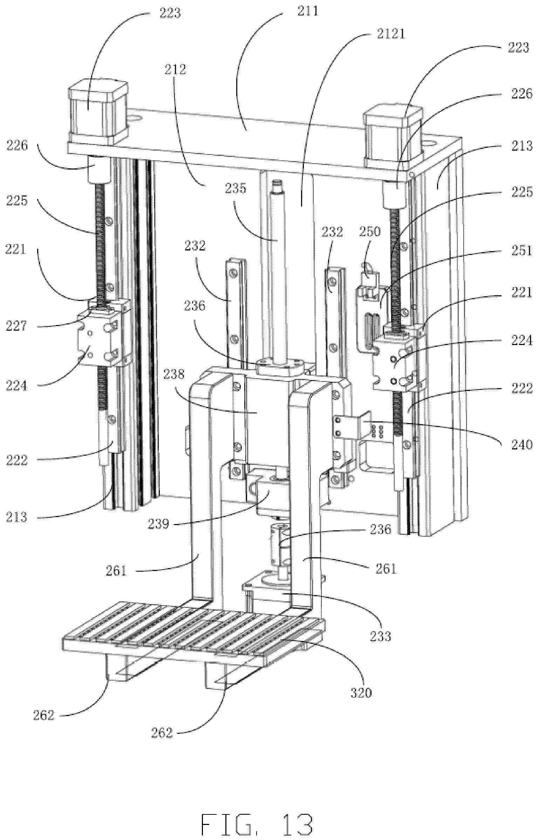

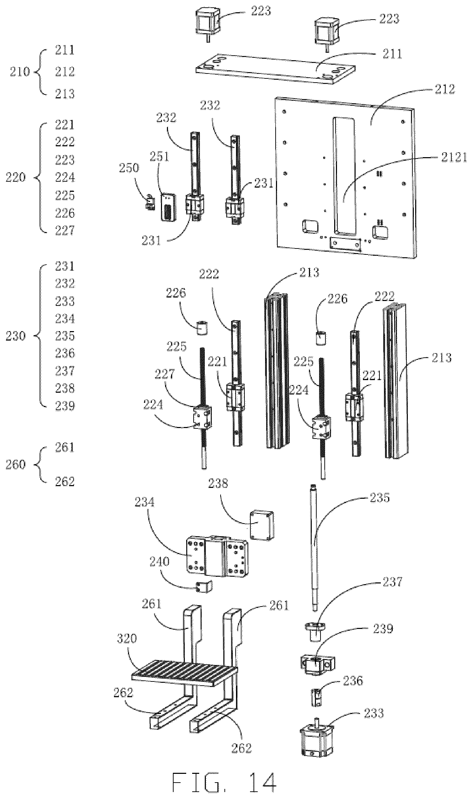

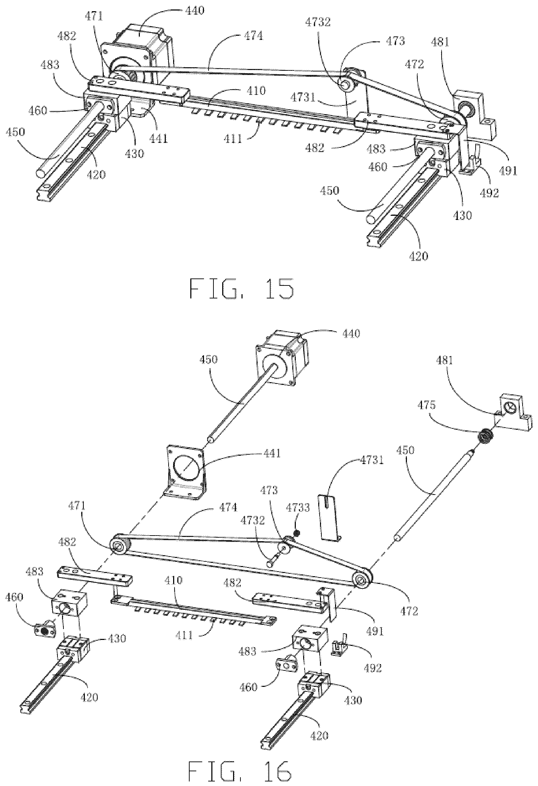

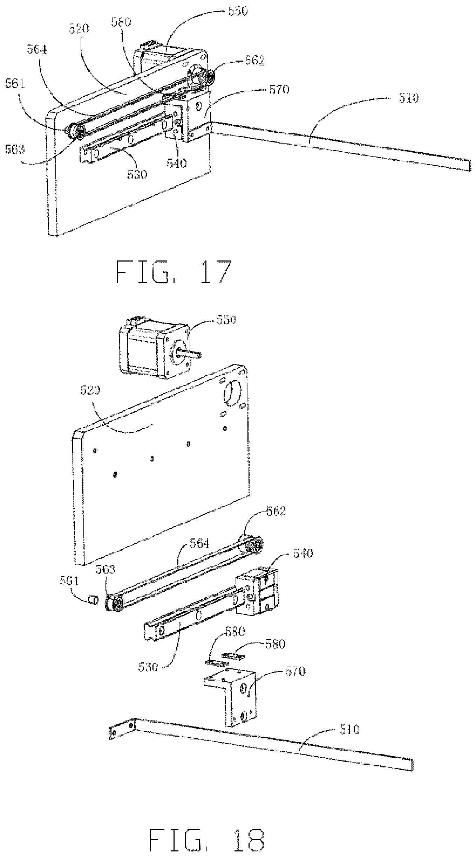

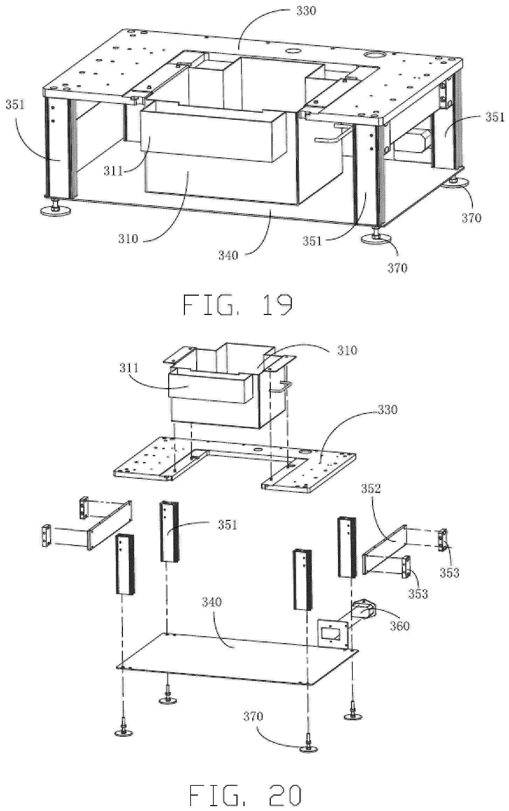

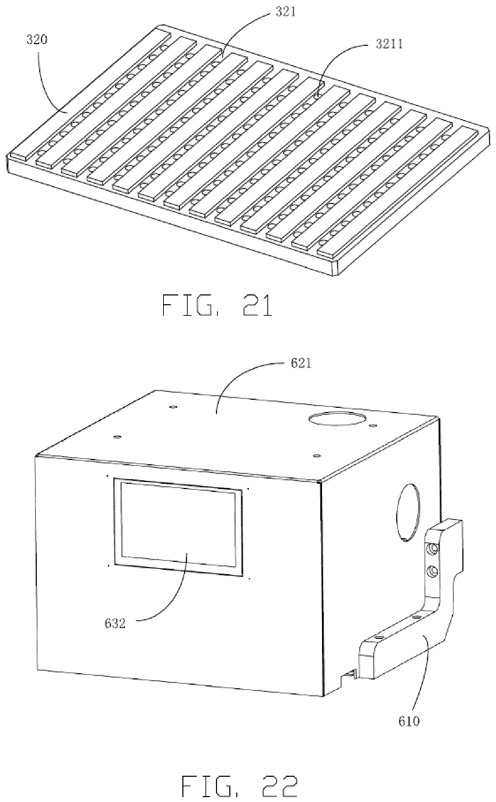

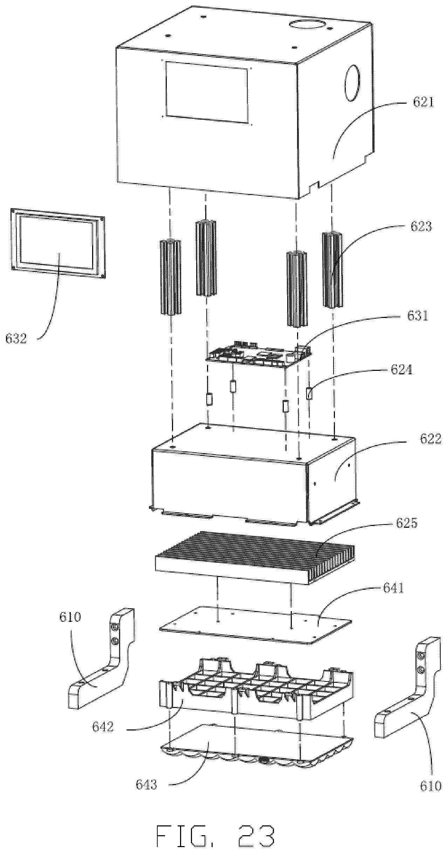

The following descriptions are embodiments of structures of the 3D printing system. Referring to FIG. 6 to FIG. 23. FIG. 6 is top plan view of the release film replacement device in FIG. 4. FIG. 7 is a cross-section view of the release film replacement device of FIG. 6 in A-A direction. FIG. 8 is an enlarged view of the release film replacement device of FIG. 7 in part B. FIG. 9 is an enlarged view of the release film replacement device of FIG. 7 in part C. FIG. 10 is a schematic drawing of a screen spacer, a screen compression block, and a glass supporting plate in the release film replacement device of FIG. 4. FIG. 11 is a schematic drawing of a pression assembly in the release film replacement device of FIG. 4 moving close to the release film. FIG. 12 is a schematic drawing of a pression assembly in the release film replacement device of FIG. 4 moving away from the release film. FIG. 13 is a schematic drawing of a rack in the 3D printing system of FIG. 1. FIG. 14 is an explosion view of the rack in FIG. 13. FIG. 15 is a schematic drawing of a model separate assembly in the 3D printing system of FIG. 1. FIG. 16 is an explosion view of the model separate assembly in FIG. 15. FIG. 17 is a schematic drawing of a model push assembly in the 3D printing system of FIG. 1. FIG. 18 is an explosion view of the model push assembly in FIG. 17. FIG. 19 is a schematic drawing of a base assembly in the 3D printing system of FIG. 1. FIG. 20 is an explosion view of the base assembly in FIG. 19. FIG. 21 is a schematic drawing of a forming platform in the 3D printing system of FIG. 1. FIG. 22 is a schematic drawing of a light source assembly in the 3D printing system of FIG. 1. FIG. 23 is an explosion of the light source assembly in FIG. 22.

Referring to FIG. 4, FIG. 5, FIG.7, and FIG. 8, in one embodiment, the winding assembly 110 of the 3D printing system further includes a first fixing plate 113. The first fixing plate 113 is connected to the rack 200. The first reel 111 and the second reel 112 are mounted on the same side of the first fixing plate 113. The second end of the release film 160 is able to pass over an edge of the first fixing plate 113 and pass through a side of the first fixing plate 113 that is back from the first reel 111, to be wound on the second reel 112. Since the second end of the release film 160 is able to cross the edge of the first fixing plate 113 and pass through a side of the first fixing plate 113 that is back from the first reel 111, to be wound on the second reel 112, the release film 160 is able to be tensed through the fixing plate 113, so that the release film 160 has a higher flatness throughout the printing process, and the printing quality of the model is also better.

In one embodiment, the light source assembly 600 includes a second fixing plate 610. The second fixing plate 610 is fixedly connected to the first fixing plate 113, so that the release film replacement device 100 and the light source assembly 100 are capable of being moved synchronously, making the 3D printing system become an upward-facing printing system in which the light source assembly 600 is above the trough 310, with less damage to the release film 160.

Referring to FIG. 4, FIG. 5, FIG.7, and FIG. 8, in one embodiment, the winding assembly 110 of the 3D printing system further includes supporting arms 114 and mounting clamps 115. A side of each of the support arms 114 away from the release film 160 is fixedly connected to a side of the first fixing plate 113 away from the release film 160. Another side of each of the support arms 114 defines a first coupling slot 1141. Each of the mounting clamps 115 is connected to a side of each of the support arm 114 that is away from the first fixing plate 113. A side of each of the mounting clamps 115 near the support arm 115 defines a second coupling slot 1151. Each second coupling slot 1151 and each first coupling slot 1141 are capable of jointly enclosing a mounting cavity. Ends of the first reel 111 and the second reel 112 extend into the mounting cavities and rotationally connect with inner wall of the mounting cavity. By providing the first coupling slot 1141 in the support arm 114 and the second coupling slot 1151 in the mounting press 115, the first reel 111 and the second reel 112 can be rotationally connected with the inner wall of the mounting cavity, so that the first reel 111 and the second reel 112 are suspended from the first fixing plate 113, the first reel 111 and the second reel 112 are capable of winding a larger amount of the release film 160, and are smoother when rotating around their own axes.

In one embodiment, the first reel 111 further includes a damper. The damper is configured to make the first reel 111 less likely to rotate around its own axis. When the second reel 112 rotates around the axis of the second reel 112, the first reel 111 is driven to rotate by traction of the release film 160 to perform an unwinding operation. So that the release film 160 not easy to be loosened under the tautening effect of the first reel 111 and the second reel 112.

Referring to FIG. 4, FIG. 5, FIG. 7, FIG. 9, FIG. 10, in one embodiment, the release film replacement device 100 of the 3D printing system further includes a pression assembly 120. The pression assembly 120 is arranged at the side of the release film 160 away from the winding assembly 110, and the pression assembly 120 is connected to the first fixing plate 113. The pression assembly 120 is capable of moving away from or close to the release film 160.

The pressing assembly 120 presses the release film 160 on the side of the release film 160 away from the first fixing plate 113, so that the release film 160 can be taut, and the release film 160 that is under the first fixing plate 113 can be in the same horizontal plane, and thus the release film 160 is more flat, and light transmittance of the release film 160 is also better, and the quality of the printed model is improved. When the release film 160 needs to be replaced during use, the pression assembly 120 is moved away from the release film 160 to separate the release film 160 from the pression assembly 120. When the release film 160 is completely separated from the pression assembly 120, the pression assembly 120 then controls the winding assembly 110, the second reel 112 rotates around its own axis in the first direction to complete the replacement operation of the release film 160.

Referring to FIG. 4, FIG. 5, FIG. 7, FIG. 9, and FIG. 10, in one embodiment, the pression assembly 120 of the 3D printing system further includes a pression frame 121. The release film replacement device 100 further includes a first drive assembly 130. The first drive assembly 130 is mounted on the first fixing plate 113, and the first drive assembly 130 is connected to the pression frame 121. The first drive assembly 130 is configured to drive pression frame 121 to move close to or far away from the release film 160. When the release film 160 is needed to be replaced, the first drive assembly 130 drives the pression frame 121 to move away from the used release film 162, to separate the pression frame 121 from the used release film 162. The second reel 112 is rotated in the first direction, so that the used release film 162 between the first reel 111 and the second reel 112 is wound onto the second reel 112 under the rotation of the second reel 112. The unused release film 161 on the first reel 111 will be unwound between the first reel 111 and the second reel 112. When the unwinding operation of the unused release film 161 is completed, the first drive assembly 130 drives the pression frame 121 to move close to the unused release film 161, so that the unused release film 161 is compressed and tautened by the pression frame 121, and then continue to complete the operation of printing the model.

In one embodiment, the first drive assembly 130 may be a linear motor drive. In other embodiments, the first drive assembly 130 may be a belt drive or a silk rod drive, without any limitation, as long as the first drive assembly 130 is capable of driving the pression frame 121 to move away form or close to the release film 160.

Referring to FIG. 4, FIG. 5, FIG. 7, FIG. 9, and FIG. 10, in one embodiment, the first drive assembly 130 of the 3D printing system includes a first drive member 131, a first screw nut 139, and a first lifting screw rod 132. The first drive member 131 is mounted on the first fixing plate 113. The first screw nut 139 is fixedly connected to the pression frame 121. An end of the first lifting screw rod 132 is connected to an output end of the first drive member 131, another end of the first lifting screw rod 132 penetrates the first fixing plate 113 and is threaded to the first screw nut 139. The first drive member 131 is configured to drive the first lifting screw rod 132 to rotate around an axis of the first lifting screw rod 132, to make the pression frame 131 move close to or away from the release film 160.

When the release film 160 needs to be replaced, the first drive member 131 drives the first lifting screw rod 132 to rotate around its own axis, and the first screw nut 139 is capable of moving up and down relative to the first lifting screw rod 132 in a height direction, thereby the pression frame 121 is driven to move away from the used release film 162, and the pression frame 121 is separated from the used release film 162. The second reel 112 is rotated in the first direction, to make the used release film 162 between the first reel 111 and the second reel 112 be wound onto the second reel 112 under the rotation of the second reel 112. While the unused release film 161 on the first reel 111 is unwound between the first reel 111 and the second reel 112. When the unwinding operation of the unused release film 161 is completed, the pression frame 121 is driven by the first lifting screw rod 132 to move close to the unused release film 161, so that the unused release film 161 is compressed and tautened by the pression frame 121, and then continue to complete the operation of printing the model. In one embodiment, the first screw nut 139 is a T-nut. In one embodiment, the first drive member 131 is mounted to the first fixing plate 113 via a first fixing seat 138.

In one embodiment, the first drive member 131 may be a motor drive. The motor drive is capable of driving the first lifting screw rod 132 to rotate around the axis of the first lifting screw rod 132. In other embodiments, the first drive member 131 may be a rotary cylinder, which is not limited herein.

Referring to FIG. 4, FIG. 5, FIG. 7, FIG. 11, and FIG. 12, in one embodiment, the release film replacement device includes multiple of the first lifting screw rods 132. The multiple of the first lifting screw rods 132 are spaced apart in a length direction and a width direction of the first fixing plate 113. The first drive assembly 130 further includes a synchronization mechanism. The synchronization mechanism is mounted to the first fixing plate 113, the synchronization mechanism is connected to the first drive member 131, and the synchronization mechanism is connected to the multiple of first lifting screw rods 132 respectively. The multiple of first lifting screw rods 132 are capable of rotating around their own axes respectively under the driving of the synchronization mechanism.

Since the multiple of first lifting screw rods 132 are spaced apart along the length direction and the width direction of the first fixed plate 113, the pression frame 121 can be connected to the multiple of first lifting screw rods 132, and forces on the pression frame 121 is more balanced. When the pression frame 121 is moved close to or away from the release film 160, the movement process is smoother, and the pression frame 121 is less likely to be warped or overturned. In one embodiment, the number of first lifting screw rods 132 is four, and the four first lifting screw rods 132 are provided at the four corners of the first fixed plate 113, so that the pression frame 121 can be moved smoothly. In other embodiments, the number of the first lifting screw rods 132 may be six, eight, etc., without limitation, which may be adapted based on weight and size of the pression frame 121.

Referring to FIG. 4 and FIG. 5, in one embodiment, the synchronization mechanism includes a first driving synchronous wheel 133, multiple first driven synchronous wheels 134, and a first synchronous belt 135. The first driving synchronous wheel 133 and the multiple first driven synchronous wheels 134 are spaced apart. The first driving synchronous wheel 133 is connected to the power output end of the first drive member 131. The multiple first driven synchronous wheels 134 are respectively connected to ends of the first lifting screw rods 132 away from the pression frame 121. The first driving synchronous wheel 133 and the multiple first driven synchronous wheels 134 are capable of tensioning the first synchronous belt 135 and driving the first synchronous belt 135 to make a closed loop movement in a second direction. In one embodiment, the second direction is a clockwise direction and a counterclockwise direction in FIG. 3. The up and down movement of the multiple of first lifting screw rods 132 is controlled by the transmission of the first driving synchronous wheel 133, the multiple first driven synchronous wheels 134, and the first synchronous belt 135, which enables the multiple of first lifting screw rods 132 to be driven by a single driving member, which is more economical. The transmission of structures is also smoother and less noisy during the transmission process. In one embodiment, the number of first driven synchronous wheels 134 is four, which is corresponded with the number of first lifting screw rods 132.

Referring to FIG. 4 and FIG. 5, in one embodiment, the release film replacement device further includes a bearing 1391. The first fixing plate 113 is provided with a mounting column. The mounting column is spaced apart from the power output end of the first drive member 131. The bearing 1391 is sleeved on the mounting column. The first synchronous belt 135 is wound on the first driving synchronous wheel 133 and the bearing 1391, and is wound into an S-shape through the first driving synchronous wheel 133 and the bearing 1391. Since the first main synchronizing wheel 133 and the bearing 1391 are capable of winding the first synchronizing belt 135 into an S-shape, a contact area between the first driving synchronizing wheel 133 and the first synchronizing belt 135 is increased, which reduces slipping phenomenon between the first synchronizing belt 135 and the first driving synchronizing wheel 133. In one embodiment, the bearing 1391 is a deep groove ball bearing. The deep groove ball bearing has advantages of small friction coefficient, high limiting rotational speed, simple structure, low manufacturing cost, and high precision. The deep groove ball bearing does not need for frequent maintenance, and range of sizes and forms of the deep groove ball bearing is large. Thereby reducing the manufacturing cost of the device.

Referring to FIG. 1 to FIG. 3, and FIG. 6, in one embodiment, the first driven assembly 130 further includes bearing seats 136. The bearing seats 136 are arranged between the first fixing plate 113 and the first driven synchronous wheels 134, and the bearing seats 136 are mounted on the fixing plate 113. The first lifting screw rods 132 pass through the bearing seat 136 and have an interference fit with inner walls of the bearing seats 136. By providing the bearing seat 136, frictions between the first lifting screw rods 132 and the first fixing plate 113 is reduced. When the first lifting screw rods 132 drive the pression frame 121 to move, the whole transmission process is smoother and less laborious.

Referring to FIG. 4, FIG. 5, and FIG. 9, in one embodiment, the first drive assembly 130 of the 3D printing system further includes a guide member. The guide member is connected between the first fixing plate 113 and the pression frame 121. The pression frame 121 is slidingly connected with the guide member. When the pression frame 121 moves close to or far away from the release film 160, the pression frame 121 slides relative to the guide member. When the first lifting screw rods 132 drive the pression frame 121 to move, guiding effect of the guiding member makes the whole moving process smoother.

In one embodiment, the guide member may include a guide rail and a slider fitted together. The guide rail is mounted between the first fixing plate 113 and the pression frame 121. The pression frame 121 is mounted on the slider. When the pression frame 121 moves close to or far away from the release film 160, the slider slides on the guide rail, which has a guiding effect on the movement of the pression frame 121. In other embodiments, the guiding member may be a guiding post. The guiding post passes through the pression frame 121, and the compression frame 121 is capable of sliding relative to the guiding post. Shape and structure of the guide member are not limited in the present disclosure, as long as the guide member is capable of playing a guiding role when the pression frame 121 slides relative to the fixed plate 113.

Referring to FIG. 4, FIG. 5, and FIG. 9, in one embodiment, the guide member of the 3D printing system includes one or more guide columns 137. An end of the guide column 137 is fixedly connected to the first fixing plate 113. The pression frame 121 defines one or more connecting holes 1211. Another end of the guide column 137 penetrates the connecting hole 1211, and is slidingly connected to inner wall of the connecting hole 1211. A side of the guide column 137 away from the first fixing plate 113 is provided with a limiting portion 1371, the limiting portion 1371 extends in a radial direction of the guide column 137. The limiting portion 1371 is overlapped on the side of the pression frame 121 away from the first fixing plate 113. By providing the limiting portion 1371 on the guide column 137, a maximum distance away from the pression frame 121 is limited when the pression frame 121 is moving away from the release film 160, and the pression frame 121 is not easily detached from the first lifting screw rods 132. Safety and stability of the entire device is improved. When the first lifting screw rods 132 drive the pression frame 121 to move, guiding effect of the guide column 137 makes the whole moving process smoother. In one embodiment, a cross-section of the limiting portion 1371 is in a circular structure. In other embodiments, the cross-section of the limiting portion 1371 may be but not limited to be in a cross-shaped or a pozidriv-shaped structure.

Referring to FIG. 4, FIG. 5, FIG. 7, and FIG. 10, in one embodiment, the pression assembly 120 of the release film replacement device further includes a silicone ring 122. The silicone ring 122 is fixedly connected to the side of the pression frame 121 facing the release film 160. A side of the silicone ring 122 away from the pression frame 121 is configured to press the release film 160. By providing the silicone ring 122, friction between the release film 160 and the silicone ring 122 is improved after the release film 160 is pressed taut. The release film 160 is not easy to loosen, and gap between the release film 160 and the pression frame 121 is reduced.

Referring to FIG. 4 and FIG. 5, in one embodiment, the pression assembly 120 of the release film replacement device further includes positioning pins 123. An end of each positioning pins 123 is fixedly connected to the pression frame 121, and another end of each positioning pins 123 passes through the silicone ring 122 and positioning holes on the release film 160. By providing the positioning pin 123, the positioning pins 123 are capable of passing through the silicone ring 122 and be inserted into the positioning holes defined on the release film 160, positional accuracy of the release film 160 is improved. In one embodiment, the number of the positioning pins 123 is four, and the four positioning pins 123 are respectively provided on the four sides of the pression frame 121 and are adapted to positions of the positioning holes defined on the release film 160. In other embodiments, the number of positioning pins 123 may be but not limited to be two, six, etc.

Referring to FIGs. 4-7, the release film replacement device 100 of the 3D printing system provided in an embodiment of the present invention further includes a second drive assembly 140. The second drive assembly 140 is mounted on the first fixing plate 113, and the second drive assembly 140 is connected to one end of the second reel 112. The second drive assembly 140 is capable of driving the second reel 112 to rotate around an axis of the second reel 112 in a first direction. Since the second drive assembly 140 is provided, when the release film 160 needs to be replaced, after the first drive assembly 130 drives the pression frame 121 away from the release film 160, the second drive assembly 140 is capable of driving the second reel 112 to rotate around its own axis in the first direction, thereby achieving the replacement operation of the release film 160. In one embodiment, the second drive assembly 140 is a motor, and an output shaft of the motor rotates to drive the second reel 112 to rotate around its own axis. In other embodiments, the second drive assembly 140 may be, but not limited to be, a rotary cylinder, as long as it is possible to achieve the second drive assembly 140 to drive the second reel 112 to rotate around its own axis.

Referring to FIG.5, in one embodiment, the second drive assembly 140 further includes a second drive member 141, a second driving synchronous wheel 142, a second driven synchronous wheel 143, and a second synchronous belt 144. The second driving member 141 is mounted on the first fixing plate 113. The second driving synchronous wheel 142 and the second driven synchronous wheel 143 are provided opposite to each other and spaced apart. The second driving synchronous wheel 142 is set and fixed to a power output end of the second driving member 141, and the second driven synchronous wheel 143 is set and fixed to one end of the second reel 112. The second driving synchronous wheel 142 and the second driven synchronous wheel 143 are capable of tensioning the second synchronous belt 144 and are capable of driving the second synchronous belt 144 to perform a closed loop movement in the first direction under the drive of the second driving member 141. The rotation of the second reel 112 around its own axis is controlled by the driving action of the second driving member 141, the second driving synchronous wheel 142, the second driven synchronous wheel 143, and the second synchronous belt 144, so that the second reel 112 is smoother and less noisy in the process of rotation. In one embodiment, the second driving member 141 is fixedly connected to the first fixing plate 113 by a second fixing seat 145. In one embodiment, the second driving member 141 is a motor, and the motor drives the second reel 112 to rotate around its own axis. In other embodiment, the second driving member 141 may also be a rotary cylinder or the like, without limitation.

It should be noted that user can calculate the wear and tear time of the release film 160, and then make the machine automatically replace the release film 160 periodically. For example, when the 3D printing system has been printed for 100 hours, the first drive assembly 130 and the second drive assembly 140 can be driven by themselves to replace the release film 160. In another example, during the printing process, when the user observes that the release film 160 has been worn out, the user can manually drive the first drive assembly 130 and the second drive assembly 140 to perform the operation of replacing the release film 160.

The 3D printing system provided in an embodiment of the present invention further includes a controller, the controller is connected to the pression assembly 120 and the second drive assembly 140. When the pression assembly 120 is moved away from the release film 160, the controller is capable of controlling the second drive assembly 140, so that the second drive assembly 140 drives the second reel 112 to rotate around its own axis in the first direction. Due to the provision of the controller, the second drive assembly 140 controls the second real 112 to rotate around its own axis when the pression assembly 120 is moved away from the release film 160, thereby enabling the device to realize the operation of automatically replacing the release film 160 without the need for manually observing and controlling the start-up time of the second drive assembly 140.

Referring to FIG. 4 and FIG. 5, an embodiment the release film replacement device of the present invention further includes a screen assembly 150, the screen assembly 150 is arranged between the release film 160 and the first fixing plate 113. The screen assembly 150 includes a printing screen 151. A screen mounting plate 1511 is provided convexly along a thickness direction of the printing screen 151 on one side of the printing screen 151. The first fixing plate 113 is provided with a first mounting groove 1131, and the screen mounting plate 1511 can be inserted into the first mounting groove 1131 and fixedly connected with groove wall of the first mounting groove 1131. The connection between the printing screen 151 and the first fixing plate 113 is achieved by the screen mounting plate 1511 on the printing screen 151 being fixedly connected to the groove wall of the first mounting groove 1131 on the first fixing plate 113. In one embodiment, the printing screen 151 is a 4K printing screen.

Referring to FIG. 5 and FIG. 10, the screen assembly 150 of the release film replacement device provided in an embodiment of the present invention further includes a screen cushion 152, a glass supporting plate 154, and a screen compression block 153 disposed sequentially in a vertical direction, and the screen cushion 152, the glass supporting plate 154 and the screen compression block 153 are disposed between the printing screen 151 and the first fixing plate 113. One side of the screen cushion 152 is fixedly connected with the first fixing plate 113, another side of the screen cushion 152 is fixedly connected with the screen compression block 153, and the glass supporting plate154 can be pressed against the screen cushion 152 by the screen compression block 153. Due to the first fixing plate 113 is a hollow frame structure, the glass supporting plate 154 can protect the print screen 151, light source device above the first fixing plate 113 or outside debris is not easy to directly contact with the printing screen 151, and the printing screen 151 is not easy to scratch damage.

Referring to FIG. 5 and FIG. 10, the screen assembly 150 of the release film replacement device provided in an embodiment of the present invention further includes a first connecting member 156. One end of the first connecting member 156 is connected to the screen compression block 153, and another end of the first connecting member 156 extends through the screen cushion 152 and is fixedly connected to the screen cushion 152, so that the glass supporting plate 154 can be pressed against the screen pad 152 by the screen compression block 153.

Referring to FIG. 10, the screen cushion 152 of the release film replacement device provided in an embodiment of the present invention is provided with a second mounting groove 1521. The second mounting groove 1521 is on a side of the screen cushion 152 close to the screen compression block 153, and a third mounting groove 1531 is provided on a side of the screen pressure block 153 close to the screen cushion 152, so that side edges of the glass supporting plate 154 are able to be received and snapped into the second mounting groove 1521 and the third mounting groove 1531. By receiving the side edges of the glass supporting plate 154 through the second mounting groove 1521 and the third mounting groove 1531, the glass supporting plate 154 is less prone to the risk of chipping, and damage to the glass supporting plate 154 is reduced when the glass supporting plate 154 is connected by bolts and other connecting means.

Referring to FIG. 5, the screen assembly 150 of the release film replacement device provided in an embodiment of the present invention further includes a PVC plate 155, the PVC plate 155 is arranged on a side of the printing screen 151 that is away from the screen compression block 153 and is connected to the printing screen 151. The PVC sheet 155 is capable of blocking interfering light generated by a light source, so that the light-sensitive resin that is light curing and molding below the release film 160 is less likely to be affected by light projected from edges of the printing screen 151, and the entire model is printed with greater precision.

Referring to FIGs. 1-3 and FIGs. 15-16, the 3D printing system provided in an embodiment of the present invention further includes a model separate assembly 400. The model separate assembly 400 is connected to the base assembly 300. The model separate assembly 400 includes a third connecting plate 410. A scraper 411 is provided on a side of the third connecting plate 410 close to the forming platform 320. When the forming platform 320 moves to a predetermined position in a height direction of the rack 200, the third connecting plate 410 is capable of driving the scraper 411 to be inserted between an upper surface of the forming platform 320 and the printing model, and move along a width direction of the forming platform 320. The printing model can be gradually separated from the forming platform 320 during the movement of the scraper 411. When the printing material is formed into a printing model layer by layer on the upper surface of the forming platform 320, the forming platform 320 is moved in the height direction of the rack 200, to make the upper surface of the forming platform 320 and the lower surface of the scraper 411 are on a same level. At this time, the third connecting plate 410 drives the scraper 411 to be inserted between the upper surface of the forming platform 320 and the printing model, and moves along the width direction of the forming platform 320, so that the model and the forming platform 320 are gradually separated.

In one embodiment, the third connecting plate 410 is screwed to a screw rod, and the screw rod is connected to a handle. The user manually rotates the handle connected to the third connecting plate 410, causing the screw rod to rotate around its own axis, thereby driving the third connecting plate 410 to move in the width direction of the forming platform 320, and the printing model is gradually separated from the forming platform 320.

In one embodiment, the third connecting plate 410 is connected to a driving member. The driving member drives the third connecting plate 410 to move in the width direction of the forming platform 320, and the printing model is gradually separated from the forming platform 320. The driving member may be a motor or a rotary cylinder.

Referring to FIG. 2, FIG. 3, FIG. 13, FIG. 14, and FIG. 21, an upper surface of the forming platform 320 of the 3D printing system provided in an embodiment of the present invention is provided with a groove 321 recessed inwardly along a thickness direction of the forming platform 320, and the groove 321 extends in a width direction of the forming platform 320. The scraper 411 is capable of being inserted into the groove 321 and moving in an extension direction of the groove 321. Since the forming platform 320 is provided with the groove 321, when the printing model is molded on the forming platform 320 and needs to be separated from the forming platform 320 by the scraper 411, the scraper 411 can be conveniently inserted into the groove 321 and moved in the extension direction of the groove 321, so that the printing model and the forming platform 320 can be separated more quickly, and it is not easy to damage the lower surface of the printing model.

It is to be noted that, since the forming platform 320 is provided with a groove 321, the user can decide whether to increase printing struts according to a layer height to be printed. Specifically, when printing with a layer height of 0.2 mm, and an angle between an overhanging portion of the printing model and the upper surface of the forming platform 320 is less than 45°, the user may choose to add printing struts in the groove 321 to ensure the printing effect. When printing with a layer height of 0.1 mm, and the angle between the overhanging portion of the printing module and the upper surface of the forming platform 320 is less than 30°, the printing struts can be selected to be added in the groove 321. When the printing process is completed, the scraper 411 is inserted into the groove 321 to make the printing struts separate from the forming platform 320, and when the scraper 411 is moved to a front end of the forming platform 320 along the extension direction of the groove 321, the entire printing model and the forming platform 320 may be separated by moving the forming platform 320 slightly downwardly or by moving the scraper 411 slightly upwardly.

Referring to FIG. 2, FIG. 3, FIG. 13, and FIG. 21, the 3D printing system provided in an embodiment of the present invention has a plurality of grooves 321, the plurality of grooves 321 is spaced apart in a length direction of the forming platform 320. A plurality of scrapers 411 is corporate to the plurality of grooves 321. Since the plurality of grooves 321 are provided, when the printing model needs to be separated from the forming platform 320, the plurality of spatulas 411 can simultaneously move along the extension direction of the grooves 321, thereby enabling the printing model to be separated from the forming platform 320 more quickly. In one embodiment, the number of grooves 321 is twelve, in other embodiments, the number of grooves 321 may be, but not limited to be, ten, eleven, thirteen, or fourteen, etc. The number of grooves 321 may be set according to a length of the forming platform 320.

Referring to FIG. 2, FIG. 3, FIG. 13, and 21, a plurality of through holes 3211 are provided in bottom walls of the plurality of grooves 321 in the 3D printing system provided in an embodiment of the present invention. The plurality of through holes 3211 is provided at intervals along the extension direction of the grooves 321. Since the bottom walls of the grooves 321 is provided with the plurality of through holes 3211, when the forming platform 320 moves up and down in the height direction of the rack 200 during the process of printing a model, the photosensitive resin in the material container 722 can flow into the upper portion of the forming platform 320 very quickly through the through holes 3211, so that the photosensitive resin on the upper portion of the forming platform 320 is replenished at a faster rate, and liquid surface can also be quickly restored to a relatively flat state, and a scraper is no longer additionally required to scrape the liquid surface of the photosensitive resin, the printing quality of the model is improved. In one embodiment, the number of through holes 3211 is twelve, in other embodiments, the number of through holes 3211 may be, but not limited to be, ten, eleven or thirteen, fourteen, etc., which can be set based on the width of the forming platform 320.

Referring to FIG. 15 and FIG. 16, the model separate assembly 400 of the 3D printing system provided in an embodiment of the present invention further includes a third sliding rail 420 and a third sliding block 430. The third sliding rail 420 is connected to the base assembly 300, and the third sliding rail 420 extends in the width direction of the forming platform 320. The third sliding block 430 is slidably connected to the third sliding rail 420, and the third connecting plate 410 is fixedly connected to the third sliding block 430. The third connecting plate 410 can be moved along an extension direction of the third sliding rail 420 under the driving of the third sliding block 430. When the printing model needs to be separated from the forming platform 320, the third sliding block 430 is slid relative to the third sliding rail 420, so that the third connecting plate 410 is able to be moved in the extension direction of the third sliding rail 420 under the driving of the third sliding block 430, which in turn enables the scraper 411 to be inserted into the groove 321 and to be moved in the extension direction of the groove 321, so as to make the printing model and the forming platform 320 gradually separate.

Referring to FIG. 15 and FIG. 16, the model separate assembly 400 in the 3D printing system provided in an embodiment of the present invention further includes a fifth drive member 440, the fifth drive member 440 is fixedly connected with the base assembly 300, and a power output end of the fifth drive member 440 is connected with the third sliding block 430. The fifth drive member 440 is configured for driving the third sliding block 430 to slide along the extension of the third sliding rail 420. Since the fifth drive member 440 is provided, the third sliding block 430 can be driven by the fifth drive member 440 to slide along the extension direction of the third sliding rail 420, thereby completing the gradual separation of the printing model and the forming platform 320, which is very labor-saving and convenient. In one embodiment, the fifth drive member 440 is fixedly connected to the supporting plate 330 of the base assembly 300 via a drive member fixing seat 441. In one embodiment, the fifth drive member 440 is a motor, in other embodiments, the fifth drive member 440 may also be a rotary cylinder.

Referring to FIG. 15 and FIG. 16, the model separate assembly 400 in the 3D printing system provided in an embodiment of the present invention further includes one or more fourth screw nut 460 and one or more reciprocating screw rod 450. The fourth screw nut 460 is connected to the third sliding block 430, one end of the reciprocating screw rod 450 is connected to the power output end of the fifth drive member 440, and another end of the reciprocating screw rod 450 extends through and is threadedly connected to the fourth screw nut 460. The fifth drive member 440 is configured to drive the reciprocating screw rod 450 to rotate around its own axis, thereby causing the fourth screw nut 460 to slide up and down along a length direction of the reciprocating screw rod 450, and ultimately driving the third sliding block 430 to slide along the extension direction of the third sliding rail 420. The transmission of the reciprocating screw rod 450 makes the third sliding block 430 move in the extension direction of the third sliding rail 420, and the speed of the entire movement process is relatively smooth and constant. This in turn causes the scraper 411 to slide in the extension direction along the groove 321 at a smooth and constant speed, effectively reducing the damage of the scraper 411 to the bottom surface of the printing model.

Referring to FIG. 15 and FIG. 16, the model separate assembly 400 of the 3D printing system provided in an embodiment of the present invention further includes a second fixing plate 483 and a fourth connecting plate 482. One side of the second fixing plate 483 is fixedly connected to the third sliding block 430, another side of the second fixing plate 483 is connected to the fourth connecting plate 482. A side of the fourth connecting plate 482 away from the second fixing plate 483 is connected to the third connecting plate 410. The fourth screw nut 460 is fixedly connected to the second fixing plate 483, which in turn achieves the connection between the fourth screw nut 460 and the third sliding block 430. When the reciprocating screw rod 450 rotates around its own axis, the fourth screw nut 460 can be driven to move back and forth along the length direction of the reciprocating screw rod 450, thereby driving the third sliding block 430 fixedly connected to the second fixed plate 483 to slide along the extension direction of the third slide 420, causing the third connection plate 410 connected to the fourth connection plate 482 to slide along the extension direction of the third sliding rail 420, and ultimately achieve the technical effect of the scraper 411 separating the printing model on the forming platform 320.

It is to be noted that, a length of the fourth connecting plate 482 is larger than a length of the third sliding block 430, and an end portion of the third connecting plate 410 will not abut against the third sliding block 430 or the second fixing plate 483. Therefore, the moving process is smoother when the third connecting plate 410 is moving along the width direction of the forming platform 320.

Referring to FIG. 15 and FIG. 16, the number of reciprocating screw rod 450 in the 3D printing system provided in an embodiment of the present invention is two, and the two reciprocating screw rods 450 are provided spaced apart along the length direction of the forming platform 320 on both sides of the forming platform 320. The model separate assembly 400 further includes a third driving synchronous wheel 471, a third driven synchronous wheel 472, and a third synchronous belt 474. The third driving synchronous wheel 471 is spaced apart from the third driven synchronous wheel 472, the third driving synchronous wheel 471 is set and fixed to the power output end of the fifth drive member 440, and the third driving synchronous wheel 471 is set and fixed to an end of one of the two reciprocating screw rods 450. The third driven synchronous wheel 472 is configured to connect with the base assembly 300, and the third driven synchronous wheel 472 is fixed to one end of another one of the two reciprocating screw rods 450. The third driving synchronous wheel 471 and the third driven synchronous wheel 472 are capable of tensioning the third synchronous belt 474 and driving the third synchronous belt 474 to make a closed-loop movement in a third direction. Wherein the third direction is a clockwise direction and a counterclockwise direction viewed within a length direction of the reciprocating screw rod 450 in FIG. 15.

Since there are two reciprocating screw rods 450, the two reciprocating screw rods 450 can be connected with two third sliding blocks 430, and the two third sliding blocks 430 are connected to the two sides of the third connecting plate 410, the third connecting plate 410 is subjected to a larger and more balanced support force, and thus the third connecting plate 410 is not easy to oscillation in the process of movement due to the one side overhanging. When the third connecting plate 410 drives the scraper 411 to move along the width direction of the forming platform 320, movement can be more stable and smoother. Meanwhile, under the transmission of the third driving synchronous wheel 471, the third driven synchronous wheel 472 and the third synchronous belt 474, the rotation speeds of the two reciprocating screw rods 450 are consistent, and it is not easy for the two sides of the third connecting plate 410 to be tilted forward and backward, which in turn makes the plurality of scrapers 411 connected to the third connecting plate 410 more consistent in terms of resistance to which they are subjected when the models are separated. The service life of the scrapers 411 is also consistent, making it easy to uniformly replace scrapers 411.

Referring to FIG. 15 and FIG. 16, the model separate assembly 400 in the 3D printing system provided in an embodiment of the present invention further includes a bearing fixing seat 481 and a first bearing 475. The bearing fixing seat 481 is fixedly connected to the supporting plate 330, and an outer wall of the first bearing 475 extends through the bearing fixing seat 481 and is cooperated with the bearing fixing seat 481 with an interference fit. An end of the reciprocating screw rod 450 fixedly attached to the third driven synchronizing wheel 472 is cooperated with the first bearing 475, making the reciprocating screw rod 450 more stable when rotating around its own axis.

Referring to FIG. 15 and FIG. 16, the model separate assembly 400 in the 3D printing system provided in an embodiment of the present invention further includes a tensioning wheel 473, the tensioning wheel 473 is arranged between the third driving synchronous wheel 471 and the third driven synchronous wheel 472. The third synchronous belt 474 is wound on the tensioning wheel 473. The tensioning wheel 473, the third driving synchronous wheel 471 and the third driven synchronous wheel 472 are able to form a triangular shape. By adjusting the position of the tensioning wheel 473, the elasticity of the third synchronous belt 474 can be adjusted, thereby making the third driving synchronous wheel 471 and the third driven synchronous wheel 472 drive the two reciprocating screw rods 450 to rotate around their own axes through the third synchronous belt 474, the third synchronous belt 474 is not prone to slip, and the rotational speeds of the two reciprocating screw rods 450 are more consistent.

Furthermore, the model separate assembly 400 further includes a tensioning wheel fixing seat 4731, a rotating member 4732, and a locking member 4733. The tensioning wheel 473 is fixedly connected to the supporting plate 330 of the base assembly 300 via the tensioning wheel fixing seat 4731. The tensioning wheel fixed seat 4731 is provided with a strip hole, and the rotating member 4732 extends through the strip hole and is connected to the locking member 4733, thereby achieving the fixed connection of the tensioning wheel 473 and the tensioning wheel fixed seat 4731. When the position of the tensioning wheel 473 needs to be adjusted, it is only necessary to unscrew the locking member 4733, so that the rotating member 4732 can slide in the strip hole, so as to the position of the tensioning wheel 473 can be adjusted with respect to the tensioning wheel fixing seat 4731, and when the adjustment is completed, the locking member 4733 is screwed again. In one embodiment, the rotating member 4732 is a corkscrew, and the locking member 4733 is an anti-loosening nut.

Referring to FIG. 1 to FIG. 3 and FIG. 17 to FIG. 18, the 3D printing system provided in an embodiment of the present invention further includes a model push assembly 500, the model push assembly 500 is connected to the base assembly 300. The model push assembly 500 includes a push plate 510, the push plate 510 is provided on a side of the third connecting plate 410 away from the scraper 411. When the printing model is separated from the forming platform 320, the push plate 510 is capable of moving in the width direction of the forming platform 320 and push the printing model away from the forming platform 320.

Specifically, when the printing model is separated from the forming platform 320, the push plate 510 is capable of moving along the width direction of the forming platform 320 and contacting a side wall of the printing model, at which time the push plate 510 continues to move and propel the printing model away from the forming platform 320 to a recycling groove. Since the scraper 411 separates the printing model from the forming platform 320 in the 3D printing system, and then the push plate 510 pushes the printing model away from the forming platform 320, there is no need to manually pick up the separated printing model, and the printing progress of the entire device is faster and safer. Meanwhile, in the process of shoveling the printing model by the scraper 411, the printing model will not exert a thrust force on the push plate 510 in an opposite direction of the movement of the scraper 411, so that the scraper 411 is easy to shovel the printing model, and the push plate 510 is not easy to be damaged.

In one embodiment, the push plate 510 is threadedly screwed to a screw rod, the screw rod is connected with a handle. When the printing model is separated from the forming platform 320, rotating the handle connected with the push plate 510 to move the printing model away from the forming platform 320 into the recycling groove in the width direction of the forming platform.

In another embodiment, the push plate 510 is connected to a drive member. When the printing model is separated from the forming platform 320, the drive member drives the push plate 510 in the width direction of the forming platform and pushes the printing model away from the forming platform 320 to the recycling groove. Specifically, the driving member may be a motor or a rotary cylinder.

In one embodiment, the third connecting plate 410 is slidingly connected to the rack 200, and the third connecting plate 410 is capable of driving the scraper 411 to move up and down along the height direction of the rack 200, so as to enable the scraper 411 to adjust the height of the insertion in the groove 321.

It is to be noted that, since the model separate assembly 400 and the model push assembly 500 in the present device are separated from each other, when the photosensitive resin on the top portion of the printing model is not fully light-cured after the printing process is completed, it is also possible to directly separate the bottom of the printing model from the forming platform 320 through the model separate assembly 400 first, and during the process of separation, the photosensitive resin on the top portion of the printing model can continue to carry out light-curing action. When the separation is completed, the printing model is then pushed away from the forming platform 320 by the model push assembly 500, which can effectively save the time required for the demolding process. The waiting time when the scraper 411 is connected to the push plate 510 is reduced, the waiting time is required for the complete light curing of the top portion of the printing model before stripping operations being performed in order to prevent the push plate 510 from damaging the printing model which has not been completely light-cured.

Referring to FIG. 2 and FIG. 3, the forming platform 320 of the 3D printing system provided in an embodiment of the present invention is distributed within a length range of the push plate 510. Since the forming platform 320 is distributed within the length range of the push plate 510, when the push plate 510 pushes the printing model, the push plate 510 can very easily contact with the side wall of the printing model and push it, avoiding the situation where the push plate 510 is not able to abut against the printing model when the push plate 510 is moved along the width direction of the forming platform 320 if the width of the printing model is narrow and the length of the push plate 510 is also short. In one embodiment, the length of the push plate 510 is one meter, and the length of the forming platform 320 is 0.8 meters. It is to be noted that, the length of the push plate 510 and the forming platform 320 are not limited, and they may be adaptively modified based on the situations.

In one embodiment, the side of the push plate 510 close to the printing model is further provided with a rubber layer, when the push plate 510 needs to push the printing model to move, the rubber layer is in contact with the surface of the printing model, which can effectively reduce problem of scratching the surface of the printing model.

Referring to FIG. 17 and FIG. 18, the model push assembly 500 of the 3D printing system provided in an embodiment of the present invention includes a first mounting plate 520, a fourth sliding rail 530, and a fourth sliding block 540. The first mounting plate 520 is connected to the base assembly 300, the fourth sliding rail 530 is mounted on a side of the first mounting plate 520 close to the forming platform 320, and the fourth sliding rail 530 extends in the width direction of the forming platform 320; the fourth sliding block 540 is slidably connected to the fourth sliding rail 530, the push plate 510 is fixedly connected to the fourth sliding block 540, and the push plate 510 is capable of moving along the width direction of the forming platform 320 under the driving of the fourth sliding block 540 and push the printing model away from the forming platform 320.

Referring to FIG. 17 and FIG. 18, the model push assembly 500 in the 3D printing system provided in an embodiment of the present invention includes a first mounting plate 520, a fourth sliding rail 530, and a fourth sliding block 540. The first mounting plate 520 is configured for fixedly connecting with the base assembly 300, the fourth sliding rail 530 is mounted on a side of the first mounting plate 520 close to the forming platform 320, and the fourth sliding rail 530 extends in the width direction of the forming platform 320. The fourth sliding block 540 is slidably connected to the fourth sliding rail 530, the push plate 510 is fixedly connected to the fourth sliding block 540, and the push plate 510 is capable of moving along the width direction of the forming platform 320 under the driving of the fourth sliding block 540 and push the printing model away from the forming platform 320. When the scraper 411 separates the printing model from the forming platform 320, the fourth sliding block 540 drives the push plate 510 to move along the width direction of the forming platform 320, so that the push plate 510 is capable of abutting against the side wall of the printing model. When the push plate 510 continues to move, the printing model can leave the forming platform 320 under the pushing action of the push plate 510 and move to the recycling groove. When the recycle of the printing model is completed, the push plate 510 moves in an opposite direction, and a next printing of the model is carried out.

Referring to FIG. 17 and FIG. 18, the model push assembly 500 in the 3D printing system provided in an embodiment of the present invention further includes a sixth drive member 550, the sixth drive member 550 is fixedly connected to the first mounting plate 520, a power output end of the sixth drive member 550 extends through the first mounting plate 520 and is connected to the fourth sliding block 540, and the sixth drive member 550 is configured to drive the fourth sliding block 540 along the extension direction of the fourth sliding rail 530. When the printing model is separated from the forming platform 320, the sixth driving member 550 drives the fourth sliding block 540 to slide along the extension direction of the fourth sliding rail 530, and then drives the push plate 510 fixedly connected to the fourth sliding block 540 to move along the width direction of the forming platform 320 to complete the pushing action of the printing model, which is very labor-saving and convenient. In one embodiment, the sixth driving member 550 is a motor, in other embodiments, the sixth driving member 550 may also be a rotary cylinder.

In the 3D printing system of an embodiment of the present application, a demolding device includes the forming platform 320, the model separate assembly 400, and the model push assembly 500, when the print material is molded into a printing model layer by layer on the upper surface of the forming platform 320, the forming platform 320 is moved in the height direction of the rack 200, so that the upper surface of the forming platform 320 is at the same level as the lower surface of the scraper 411 of the model separate assembly 400. At this time, the third connecting plate 410 drives the scraper 411 to be inserted between the upper surface of the forming platform 320 and the printing model, and move along the width direction of the forming platform 320, so that the printing model is gradually separated from the forming platform 320. When the printing model is separated from the forming platform 320, the push plate 510 moves along the width direction of the forming platform 320 and is capable of contacting the side wall of the printing model, at which time the push plate 510 continues to move and push the printing model away from the forming platform 320 to the recycling groove. Since the scraper 411 separates the printing model from the forming platform 320, and pushes the printing model away from the forming platform 320 through the push plate 510, there is no need to manually pick up the separated printing model, and the printing progress of the entire device is faster and safer. Meanwhile, in the process of shoveling the model by the scraper 411, the printing model will not exert a thrust force on the push plate 510 in the opposite direction of the movement of the scraper 411, so that the scraper 411 is easy to shovel the printing model, and the push plate is not easy to be damaged.

In one embodiment, the model separate assembly 400 and the model push assembly 500 are connected to a controller. When the model separate assembly 400 separates the printing model from the forming platform 300, the controller sends an electrical signal to the model push assembly 500, enabling the sixth drive member 550 to drive the fourth sliding block 540 to slide along the extension direction of the fourth sliding rail 530. By monitoring and controlling the movement conditions of the model separate assembly 400 and the model push assembly 500 through the controller, the demolding device is able to achieve a highly automated demolding operation without the need for human observation and control of the driving conditions of the model push assembly 500.

Referring to FIG. 17 and 18, the model push assembly 500 in the 3D printing system provided in an embodiment of the present invention further includes a mounting shaft 561, a fourth driving synchronous wheel 562, a second bearing 563, and a fourth synchronous belt 564. The mounting shaft 561 is mounted to the first mounting plate 520, and the mounting shaft 561 is spaced apart from an power output end of the sixth drive member 550; the fourth driving synchronous wheel 562 is set and fixed to the power output end of the sixth drive member 550; the second bearing 563 is set and fixedly connected to the mounting shaft 561; the fourth driving synchronous wheel 562 and the second bearing 563 can tension the fourth synchronous belt 564 and drive the fourth synchronous belt 564 to make a closed loop movement in a fourth direction; the fourth slider 540 is fixedly connected to the fourth synchronous belt 564, the fourth direction is a clockwise direction and a counterclockwise direction of the entire mounting plane of the first mounting plate 520 mounting the fourth sliding rail 530 in FIG. 17.

The fourth synchronous belt 564 drives the fourth sliding block 540 to slide along the extension direction of the fourth sliding rail 530, thereby driving the movement of the push plate 510, so that the push plate 510 is smoother and less prone to vibration or shaking in the process of movement. In one embodiment, the mounting shaft 561 is a spacer sleeve, the spacer sleeve extends through the first mounting plate 520, and an inner ring of the second bearing 563 is set on the spacer sleeve and has an interference fit with the spacer sleeve.

Referring to FIG. 17 and FIG. 18, the model push assembly 500 in the 3D printing system provided in an embodiment of the present invention further includes a third fixing plate 570 and a fourth fixing plate 580. The third fixing plate 570 is in a form of an "L" shaped plate, including two connecting plates. One of the connection plates is fixedly connected to the fourth sliding block 540, another of connection plates is connected to the fourth fixing plate 580 and is capable of pressing and fixing the fourth synchronous belt 564 at the connection between the two. When the fourth synchronous belt 564 makes a closed loop movement, it can drive the third fixing plate 570 and the fourth fixing plate 580 to move synchronously, and the push plate 510 connected with the third fixing plate 570 can slide along the extension direction of the fourth sliding rail 530, thus accomplishing the action of pushing the printing model. In one embodiment, the fourth fixing plate 580 is a wire press plate.

Referring to FIG. 15 and 16, the 3D printing system provided in an embodiment of the present invention further includes a third limiting member 491 and a fourth limiting member 492. The third limiting member 491 is fixedly connected to the third connecting plate 410, the fourth limiting member 492 is configured to be mounted on the base assembly 300, the third limiting member 491 can be driven by the third connecting plate 410 to move close to or farther away from the fourth limiting member 492; the cooperation between the third limiting member 491 and the fourth limiting member 492 can limit a sliding travel of the third connecting plate 410 relative to the forming platform 320. Through the cooperation of the third limiting member 491 and the fourth limiting member 492, a furthest distance moved by the third connecting plate 410 relative to the forming platform 320 can be limited, the third connecting plate 410 is not easy to detach from the third sliding rail 420, and the whole device is more secure in the operation process. In one embodiment, the third limiting member 491 is fixedly connected to the third connection plate 410 through the fourth connection plate 482.

In one embodiment, the third limiting member 491 is a limiting bump, the fourth limiting member 492 is a limiting block, the limiting block is provided with a limiting groove 321 with an opening facing the limiting bump, when the limiting bump moves close to the limiting block and is inserted into the limiting groove 321, a bottom wall of the limiting groove 321 is able to limit the movement of the limiting bump, so that the limiting bump stops sliding in the extension direction of the third sliding rail 420, thereby causing the third connection plate 410 to stop sliding in the extension direction of the third sliding rail 420.

In another embodiment, the third limiting member 491 is a limiting sensing piece, the fourth limiting member 492 is a limiting switch, the limiting switch is provided with a sensing groove 321. When the limiting sensing piece moves along the extension direction of the third sliding rail 420 and is inserted into the sensing groove 321 of the limiting switch, the limiting sensing piece is able to send an on/off signal to a chassis control component of the 3D printing system and immediately stops moving, resulting in a high positional accuracy of the scraper 411 moving relative to the forming platform 320. Of course, in other embodiments, the limiting sensing piece may enable the limiting sensing piece to send an on/off signal to the chassis control component of the 3D printing system without being inserted into the sensing groove 321 of the limiting switch. Specifically, the fourth limiting member 492 may be a photoelectric switch or a Hall switch, etc., and the third limiting member 491 cooperates the fourth limiting member 492.

Referring to FIG. 19 and FIG. 20, the material container 310 of the 3D printing system provided in an embodiment of the present invention further includes a storage chamber 311, and the push plate 510 is capable of pushing a printing model into the storage chamber 311. When the printing model is separated from the forming platform 320, the push plate 510 pushes the printing model from the upper surface of the forming platform 320 into the storage chamber 311 for short-term storage, and when a storage reaches a certain quantity, the printing model in the storage chamber 311 is then taken out in bulk. Of course, the storage chamber 311 can also prevent the photosensitive resin inside the material container 310 from spilling out of the material container.

Referring to FIG. 13 and FIG. 14, the rack 200 of the 3D printing system provided in an embodiment of the present invention includes a basal plate 210 and a first sliding assembly 220; the basal plate 210 is connected to the base assembly 300; the first sliding assembly 220 includes a first sliding block 221; the first sliding block 221 is slidingly connected to the basal plate 210, and the first sliding block 221 is fixedly connected to the light source assembly 600; the first sliding block 221 is capable of driving the light source assembly 600 and the release film replacement device 100 to move close to or farther away from the base assembly 300. Specifically, the basal plate 210 is fixedly connected to the supporting plate 310 of the base assembly 300. During the process of model printing, the forming platform 320 is at the bottom of the material container 310, and the first sliding assembly 220 drives the light source assembly 600 and the release film replacement device 100 to move close to or farther away from the base assembly 300, thereby enabling the printing model to be molded layer by layer on the upper surface of the forming platform 320.

Referring to FIG. 13 and FIG. 14, the first sliding assembly 220 of the 3D printing system provided in an embodiment of the present invention further includes a first sliding rail 222 and a third drive member 223; the first sliding rail 222 is fixedly connected to the basal plate 210, and the first sliding rail 222 extends in a height direction along the basal plate 210; and the first sliding block 221 is slidably connected to a side of the first sliding rail 222 that is away from the basal plate 210; the third drive member 223 is fixedly connected to the basal plate 210, and a power output end of the third drive member 223 is connected to the first sliding block 221, and the third drive member 223 is configured to drive the first sliding block 221 to slide along an extension direction of the first sliding rail 222. When in the printing process, the light source assembly 600 needs to be driven by the first sliding assembly 220 to move close to or farther away from the base assembly 300, the third drive member 223 drives the first sliding block 221 to slide along the extension direction of the first sliding rail 222, thereby realizing the movement of the light source assembly 600 relative to the base assembly 300, which is very labor-saving and convenient. In one embodiment, the third drive member 223 is a motor, but of course, in other embodiments, the third driving member 223 may also be a rotary cylinder.

Referring to FIG. 13 and FIG. 14, the basal plate 210 of the 3D printing system provided in an embodiment of the present invention includes a first mounting plate 211, a second mounting plate 212, and a profile mounting plate 213 connected to each other, an angel is formed between the first mounting plate 211 and the second mounting plate 212, and the profile mounting plate 213 is mounted to the second mounting plate 212. Wherein, the third drive member 223 is mounted on the first mounting plate 211, the first sliding rail 222 is mounted on the profile mounting plate 213, and the power output end of the third drive member 223 extends through the first mounting plate 211 and is connected to the first sliding rail 221. When the first sliding block 221 slides to a highest point along the extension direction of the first sliding rail 222, the first mounting plate 211 is capable of preventing the first sliding block 221 from detaching from the first sliding rail 222. Meanwhile, due to the provision of the profile mounting plate 213, the first sliding rail 222 does not need to be directly mounted on the second mounting plate 212, and the third drive member 223 and the first sliding block 221 can be mounted in a same plane along the vertical direction, and the power output end of the third driving member 223 has a better concentricity with the first sliding block 221. In one embodiment, an angle between the first mounting plate 211 and the second mounting plate 212 is 90°, and the first mounting plate 211 and the second mounting plate 212 form an "L" type plate structure. Of course, in other embodiments, the angle between the first mounting plate 211 and the second mounting plate 212 can be 75°, 115°, without limitation, and can be set according to the installation situation.

Referring to FIG. 13 and FIG. 14, the first sliding assembly 220 of the 3D printing system provided in an embodiment of the present invention further includes a first fixing block 224, a second screw nut 227, and a second lifting screw rod 225. The first fixing block 224 is fixedly connected to the first sliding block 221, and the first fixing block 224 is configured for fixedly connecting with the light source assembly 600; the second screw nut 227 is fixedly connected with the first fixing block 224; one end of the second lifting screw rod 225 is connected to the power output end of the third drive member 223, and another end of the second lifting screw rod 225 extends through the second screw nut 227 and is threadedly connected with the second screw nut 227; the third drive member 223 is configured to drive the second lifting screw rod 225 to rotate about an axis of the second lifting screw rod 225, so as to drive the first fixing block 224 to slide in an extended direction along the first sliding rail 222. Since the first fixing block 224 is fixedly connected to the first sliding block 221, when the second lifting screw rod 225 rotates around its own axis, the first fixing block 224 and the first sliding block 221 can slide along the extension direction of the first sliding rail 222 through the second screw nut 227, and thus the light source assembly 600 connected to the first fixing block 224 will also slide along the extension direction of the first sliding rail 222, thereby achieving the movement of the light source assembly 600 close to or farther away from the base assembly 300. Through the transmission of the second lifting screw rod 225, the light source assembly 600 moves up and down relative to the base assembly 300, the whole movement process is more stable, and it is not easy to occur vibration or jitter phenomenon, so the positional accuracy of the light source assembly 600 relative to the base assembly 300 is higher, and the quality of the printing model is also higher. In one embodiment, the second screw nut 227 is a T-type nut.

In one embodiment, the first fixing block 224 is fixedly connected to the second fixing plate 610, and the second fixing plate 610 is fixedly connected to the first fixing plate 113. Thus, the light source assembly 600 and the release film replacement device 100 can be synchronized to move up and down relative to the base assembly 300 by the transmission of the second lifting screw rod 225.

Referring to FIG. 13 and FIG. 14, the first sliding assembly 220 of the 3D printing system provided in an embodiment of the present invention further includes a first coupling 226, the first coupling 226 is connected between the power output end of the third drive member 223 and the second lifting screw rod 225. Since the first coupling 226 is provided, when the third drive member 223 drives the second lifting screw rod 225 to rotate around its own axis, the first coupling 226 can compensate for the offset (including axial offset, radial offset, angular offset, or a combination of offset) between the third drive member 223 and the second lifting screw rod 225 due to inaccurate manufacturing and installation, deformation during operation, or thermal expansion, so that the second lifting screw rod 225 can be more secure and smooth when rotating around its own axis, and the first coupling 226 can also moderate impact and absorb vibration during the movement.

Referring to FIG. 13 and FIG. 14, number of first sliding assemblies 220 provided in an embodiment of the present invention is two, and the two first sliding assemblies 220 are provided spaced apart along the width direction of the second mounting plate 212. By providing two first sliding assemblies 220, the connection between the light source assembly 600 and the first sliding assembly 220 is made safer and more stable, and the safety and stability of the whole device is improved.

Referring to FIG. 13 and FIG. 14, the rack 200 of the 3D printing system provided in an embodiment of the present invention further includes a second sliding assembly 230, the second sliding assembly 230 includes a second sliding block 231, the second sliding block 231 is spaced apart from the first sliding block 221 and is slidingly connected to the basal plate 210, and the second sliding block 231 is configured to be fixedly connected to the forming platform 320; the second sliding block 231 is capable of driving the forming platform 320 to move close to or farther away from the bottom wall of the material container 310. In the process of model printing, the light source assembly 600 does not move, and the second sliding assembly 230 drives the forming platform 320 to move close to or farther away from the bottom wall of the material container 310, thereby enabling the printing model to be molded layer by layer on the upper surface of the forming platform 320.

It is to be noted that, since the 3D printing system provided by an embodiment of the present invention includes both a first sliding assembly 220 and a second sliding assembly 230, when the first sliding assembly 220 that drives the light source assembly 600 up and down with respect to the material container fails during the printing process, the second sliding assembly 230 is able to continue to drive the forming platform 320 up and down within the material container, so that the printing model can continue to be printed. When the second sliding assembly 230 that drives the forming platform 320 to move up and down in the material container fails, the first sliding assembly 220 can continue to drive the light source assembly 600 to move up and down relative to the material container, which also allows the printing model to continue to be printed. When the 3D printing system is configured to print a model, either of the first sliding assembly 220 or the second sliding assembly 230 fails, the printer does not need to immediately shut down to overhaul the sliding assembly, and can still continue to print the model, thus the model printing efficiency is high, and the flexibility of the printing process is also high.

Referring to FIG. 13 and FIG. 14, the second sliding assembly 230 of the 3D printing system provided in an embodiment of the present invention further includes a second sliding rail 232 and a fourth drive member 233; the second sliding rail 232 is spaced apart from the first sliding rail 222 and fixedly connected to the basal plate 210, and the second sliding rail 232 extends in the height direction of the basal plate 210; the second sliding block 231 is slidably connected to a side of the second sliding rail 232 back from basal plate 210; the fourth drive member 233 is fixedly connected to the basal plate 210, and a power output end of the fourth drive member 233 is connected to the second sliding block 231, and the fourth drive member 233 is configured to drive the second sliding block 231 to slide along the extension direction of the second sliding rail 232. Specifically, the fourth drive member 233 is mounted on the second mounting plate 212 of the basal plate 210. During the printing process, the forming platform 320 needs to be driven by the second sliding assembly 230 to move close to or farther away from the base assembly 300, the fourth drive member 233 drives the second sliding block 231 to slide along the extension direction of the second sliding rail 232, thereby achieving the movement of the forming platform 320 relative to the base assembly 300, which is very labor-saving and convenient. In one embodiment, the fourth drive member 233 is a motor, and of course, in other embodiments, the fourth drive member 233 may also be a rotary cylinder.

Referring to FIG. 13 and FIG. 14, the second sliding assembly 230 of the 3D printing system provided in an embodiment of the present invention further includes a second fixing block 234, a third screw nut 237, and a third lifting screw rod 235. The second fixing block 234 is fixedly connected to the second sliding block 231, and the second fixing block 234 is configured to be fixedly connected to the forming platform 320; the third screw nut 237 is fixedly connected with the second fixing block 234; one end of the third lifting screw rod 235 is connected to an power output end of the fourth drive member 233, and another end of the third lifting screw rod 235 extends through the third screw nut 237 and is threadedly connected with the third screw nut 237; the fourth drive member 233 is configured to drive the third lifting screw rod 235 to rotate about its own axis, so as to drive the second fixing block 234 to slide in the extension direction of the second sliding rail 232. Since the second fixing block 234 is fixedly connected to the second sliding block 231, when the third lifting screw rod 235 rotates around its own axis, the third screw nut 237 can move up and down relative to the height direction of the third lifting screw rod 235, thereby driving the second fixing block 234 and the second sliding block 231 to slide along the extension direction of the second sliding rail 232, and thus the forming platform 320 connected to the second fixing block 234 will also slide along the extension direction of the second sliding rail 232, thereby achieving the forming platform 320 moving close to or farther away from the base assembly 300. The transmission of the third lifting screw rod 235 makes the entire movement process of the light source assembly 600 more stable and less prone to vibration or jitter when it is moving relative to the base assembly 300, and thus the positional accuracy of the forming platform 320 relative to the base assembly 300 is improved, and the quality of the printed model is also improved. In one embodiment, the third screw nut 237 is a T-shaped nut.

Referring to FIG. 13 and FIG. 14, numbers of the second sliding block 231 and the second sliding rail 232 provided in an embodiment of the present invention are two, two second sliders 231 and two second sliding rails 232 are provided at intervals along the width direction of the second mounting plate 212. By providing the two second sliders 231 and the two second sliding rails 232, the connection between the second fixing block 234 and the second sliding block 231 is made more secure and stable, and when the weight of the printing model carried on the forming platform 320 is large, the second sliding assembly 230 can also be more secure and stable when it drives the forming platform 320 to move.

Referring to FIG. 13 and FIG. 14, the second sliding assembly 230 of the 3D printing system provided in an embodiment of the present invention further includes a second coupling 236, the second coupling 236 is coupled between the power output end of the fourth drive member 233 and the third lifting screw rod 235. Since the second coupling 236 is provided, when the fourth drive member 233 drives the third lifting screw rod 235 to rotate around its own axis, the second coupling 236 can compensate for the offset (including axial offset, radial offset, angular offset, or combined offset) between the fourth drive member 233 and the third lift screw 235 due to inaccurate manufacturing and installation, deformation during operation, or thermal expansion, etc., so that the third lifting screw rod 235 can be more secure and smooth when rotating about its own axis, and the second coupling 236 can also moderate impact and absorb vibration during the movement.

Referring to FIG. 13 and FIG. 14, the rack 200 of the 3D printing system provided in an embodiment of the present invention further includes a first limiting member 240 and a second limiting member 250. The first limiting member 240 is fixedly connected to the second fixing block 234, the second limiting member 250 is fixedly connected to a side of the basal plate 210 that is far away from the forming platform 320; the first limiting member 240 can be driven by the second fixing block 234 to move close to or farther away from the second limiting member 250; the cooperation between the first limiting member 240 and the second limiting member 250 can limit a sliding travel of the second fixing block 234 relative to the second sliding rail 232. Through the cooperation of the first limiting member 240 and the second limiting member 250, the maximum sliding trail of the second fixed block 234 when sliding relative to the second sliding rail 232 is restricted, and thus the second fixing block 234 is not easily detached from the second sliding rail 232, and the entire device is safer during operation.

Referring to FIG. 13 and FIG. 14, in one embodiment, the rack 200 further includes a third fixing seat 251, the second limiting member 250 is mounted to the second mounting plate 212 of the basal plate 210 via the third fixing seat 251. Therefore, the second limiting member 250 is not easily disengaged relative to the second mounting plate 212.

In one embodiment, the first limiting member 240 is a limiting bump, the second limiting member 250 is a limiting block, and the limiting block is provided with a limiting groove, when the limiting bump moves close to the limiting block and moves to be inserted into the limiting groove, a bottom wall of the limiting groove is able to limit the movement of the limiting bump, so that the limiting bump stops sliding in the extension direction of the first sliding rail 222, which in turn makes the second fixing block 234 to stop sliding along the extension direction of the second sliding rail 232.

In another embodiment, the first limiting member 240 is a limiting sensing piece, the second limiting member 250 is a limiting switch, and the limiting switch is provided with a sensing groove. When the limiting sensing piece moves along the extension direction of the second sliding rail 232 and is inserted into the sensing groove of the limiting switch, the limiting sensing piece is able to send an on/off signal to a chassis control component of the 3D printing system and immediately stops the movement, thus the control precision of the sliding of the second fixing block 234 with respect to the second sliding rail 232 is also improved , the precision of the position of the moving of the forming platform 320 with respect to the base assembly 300 is improved, and the precision of the printing model is also improved. Of course, in other embodiments, the limiting sensing piece may enable the limiting sensing piece to send an on/off signal to the chassis control component of the 3D printing system without being inserted into the sensing groove of the limiting switch. Specifically, the second limiting member 250 may be a photoelectric switch or a Hall switch, etc., and the first limiting member 240 cooperates the second limiting member 250.

Referring to FIG. 13 and FIG. 14, the basal plate 210 of the 3D printing system provided in an embodiment of the present invention is provided with a sliding groove 2121 extending in the height direction of the basal plate 210. The second sliding assembly 230 further includes a first mounting block 238, a side of the first mounting block 238 is fixedly connected with a side of the second fixing block 234 that is back away from the forming platform 320, the first mounting block 238 is at least partially received within the sliding groove 2121 and is capable of sliding along a groove wall driven by the second fixing block 234. As the first mounting block 238 is provided, when the forming platform 320 moves up and down relative to the base assembly 300, one side of the second fixing block 234 is subjected to the gravity of the forming platform 320, and the side of the second fixing block 234 away from the forming platform 320 is subjected to a tension of the first mounting block 238, thus the force on the second fixing block 234 is more balanced, the second fixing block 234 is less likely to tip over, and the stability of the whole device is improved.

Referring to FIG. 13 and FIG. 14, the second sliding assembly 230 of the 3D printing system provided in an embodiment of the present invention further includes a second mounting block 239, the second mounting block 239 is connected to the second mounting plate 212 of the basal plate 210, the third lifting screw rod 235 extends through the second fixing block 234 and the second mounting block 239, and is connected to the second coupling 236. The fixing effect of the second mounting block 239 makes the connection of the third lifting screw 235 to the second mounting plate 212 of the basal plate 210 more stable.

Referring to FIG. 13 and FIG. 14, the rack 200 of the 3D printing system provided in an embodiment of the present invention further includes one or more second connecting member 260, the second connecting member 260 includes a first connecting plate 261 and a second connecting plate 262 connected in sequence, and an angel is formed between the first connecting plate 261 and the second connecting plate 262; the first connection plate 261 is fixedly connected to the side of the second fixing block 234 away from the first mounting block 238, and the second connection plate 262 is configured to carry the forming platform 320 and is fixedly connected thereto. Since the second connection plate 262 can carry the forming platform 320 and is fixedly connected to the forming platform 320, a contact area between the forming platform 320 and the second connection plate 262 is large, and the connection stability is better. In one embodiment, the angel between the first connecting plate 261 and the second connecting plate 262 is 90°, and the first connecting plate 261 and the second connecting plate 262 an "L" type plate structure. Of course, in other embodiments, the angle between the first connecting plate 261 and the second connecting plate 262 can be 75 °, 115 °, without limitation, which can be set according to the lighting requirements of the model to be printed.

Referring to FIG. 13 and FIG. 14, number of second connecting member 260 of the rack 200 of the 3D printing system provided in an embodiment of the present invention is at least two, and the at least two second connecting member 260 are provided spaced apart along the width direction of the basal plate 210. Since the number of the second connecting members 260 is at least two, the connection stability of the forming platform 320 to the entire rack 200 is better. In one embodiment, the number of the second connecting member 260 is two, but of course, in other embodiments, the number of the second connecting member 260 may be three, four, etc., without limitation, which may be adaptively adjusted according to the weight and size of the forming platform 320.

Referring to FIG. 19 and FIG. 20, the base assembly 300 of the 3D printing system provided in an embodiment of the present invention further includes a base plate 340, one or more profile 351, a profile fixing plate 352, and a profile fixing reinforcement 353. The supporting plate 330 is mounted on the base plate 340 via the profile 351. Two profiles 351 on sides are connected by the profile fixing plate 352 and the profile fixing reinforcement 353, so that the connection between the supporting plate 330 and the base plate 340 is more stable, and the support plate 330 is not easy to shake relative to the base plate 340, and the stability of the whole device is improved.

Referring to FIG. 19 and FIG. 20, the base assembly 300 of the 3D printing system provided in an embodiment of the present invention further includes a flame retardant combination power switch 360, the flame retardant combination power switch 360 is mounted on the base plate 340, which makes the present 3D printing system safer by reducing the spontaneous combustion at the power source when it is energized for use.

Referring to FIG. 19 and FIG. 20, the base assembly 300 of the 3D printing system provided in an embodiment of the present invention further includes adjustable foot cups 370, number of the adjustable foot cups 370 is four, the four adjustable foot cups 370 are provided on the side of the base plate 340 backing away from the profile 351 and are threadedly screwed to the profile 351. The flatness of the supporting plate 330 can be adjusted by the adjustable foot cups 370.

Referring to FIG. 23, the light source assembly 600 of the 3D printing system provided in an embodiment of the present invention further includes a lamp panel 641, a lens holder 642, a lens 643, a heat sinks 625, and a light shield 622. The lens 643 is mounted with the lens holder 642 on top of the lens 643, the lens holder 642 is mounted with the lamp panel 641 on top of the lens holder 641, the lamp panel 641 is mounted with the heat sinks 625 on top of the lamp panel 641, which are assembled into a whole by screws and are shielded from the outside thereof by the light shield 622. The lamp panel 641 is configured to emit violet light with a wavelength of 385 nm or 405 nm, the lens 643 is capable of adjusting the light emitted by the lamp panel 641 into a parallel light, which in turn passes through the release film 160 to perform light curing molding on the printing material. The heat sinks 625 dissipates heat from the lamp panel 641 to avoid damage to the lamp panel 641 due to high temperature, and the light shield 622 avoids the violet light rays from the two sides of the lamp panel 641, which in turn causes damage to the human body.

Referring to FIG. 23, the light source assembly 600 of the 3D printing system provided in an embodiment of the present invention further includes a main board 631, an isolation column 624, a support rod 623, and a light source assembly cover 621. The main board 631 is mounted on the top of the light shield 622 through the isolation column 624, and the support rod 623 connects the light shield 622 with the light source assembly cover 621. The main board 631 is electrically connected to the lamp panel 641 for controlling the on-off of the lamp panel 641, the light source assembly cover 621 is configured to cover the entire internal structure of the light source assembly 600, which makes the entire light source assembly 600 more safe and beautiful.

Referring to FIG. 23, the light source assembly 600 of the 3D printing system provided in an embodiment of the present invention further includes a touch screen 632, the touch screen 632 is mounted on an outer side of the light source assembly cover 621, the main board 631 is controlled by the touch screen 632, so that the main board 631 controls the on-off of the lamp panel 641 and controls intensity of the emitted light.

The various technical features of the above-described embodiments can be combined arbitrarily, and in order to make the description concise, all possible combinations of the technical features in the above embodiments are not exhaustive. However, as long as there is no contradiction in the combinations of these technical features, all of them should be regarded as being within the scope of the present specification.

The above-described embodiments express only several embodiments of the present invention, which are described in a specific and detailed manner, but are not to be construed as a limitation of the patent scope of the application. For a person of ordinary skill in the art, several deformations and improvements can be made without departing from the conception of the present invention, all of which fall within the scope of protection of the present invention.

## Claims

1. A 3D printing system, **characterized in that**, the 3D printing system comprising:
a rack;
a release film replacement device, wherein the release film replacement device comprises a winding assembly; the winding assembly comprises a first reel and a second reel; the first reel and the second reel are provided opposite to each other and spaced apart, and the first reel and the second reel are rotatably connected to the rack, the first reel is configured to wind a first end of the release film, the second reel is configured to wind a second end of the release film; when the second reel rotates around a axis of the second reel in a first direction, the first end of the release film is unwound from the first reel, and the second end of the release film is wound on the second reel;
a light source assembly, the light source assembly is provided above the release film replacement device, and the light source assembly is connected to the release film replacement device, the light source assembly is configured to emit light; and
a base assembly, the base assembly is arranged at a side of the release film replacement device away from the light source assembly, and the base assembly is connected to the rack, wherein the base assembly comprises a material container and a forming platform; the material container is configured to bearing printing material; the forming platform is movably connected to the rack, and the forming platform is movable up and down in the material container; the forming platform enables the printing material to be light-cured on an upper surface of the forming platform so as to form a model.

2. The 3D printing system of claim 1, **characterized in that**, the winding assembly further comprises a first fixing plate, the first fixing plate is connected to the rack, and the first reel and the second reel are mounted on a same side of the first fixing plate; the second end of the release film is able to pass over an edge of the first fixing plate and pass through a side of the first fixing plate that is back from the first reel, to be wound on the second reel.

3. The 3D printing system of claim 2, **characterized in that**, the release film replacement device further comprises a pression assembly, the pression assembly is arranged at a side of the release film away from the winding assembly, and the pression assembly is connected to the first fixing plate, the pression assembly is configure for moving away from or close to the release film.

4. The 3D printing system of claim 3, **characterized in that**, the pression assembly comprises a pression frame; the release film replacement device further comprises a first drive assembly, the first drive assembly is mounted on the first fixing plate, and the first drive assembly is connected to the pression frame; the first drive assembly is configured to drive the pression frame to move close to or farther away from the release film.

5. The 3D printing system of claim 4, **characterized in that**, the first drive assembly comprises a first drive member, a first screw nut, and a first lifting screw rod;
the first drive member is mounted on the first fixing plate, the first screw nut is fixedly connected to the pression frame, an end of the first lifting screw rod is connected to an output end of the first drive member, another end of the first lifting screw rod penetrates the first fixing plate and is threaded to the first screw nut, the first drive member is configured to drive the first lifting screw rod to rotate around an axis of the first lifting screw rod, to make the pression frame move close to or farther away from the release film.

6. The 3D printing system of claim 4, **characterized in that**, the first drive assembly further comprises a guide member, the guide member is connected between the first fixing plate and the pression frame, and the pression frame is slidingly connected with the guide member, when the pression frame moves close to or farther away from the release film, the pression frame slides relative to the guide member.

7. The 3D printing system of claim 4, **characterized in that**, the release film replacement device further comprises a second drive assembly, the second drive assembly is mounted on the first fixing plate, and the second drive assembly is connected to one end of the second reel, the second drive assembly is configured to drive the second reel to rotate around an axis of the second reel in the first direction.

8. The 3D printing system of claim 1, **characterized in that**, further comprising a model separate assembly, the model separate assembly is connected to the base assembly, the model separate assembly comprises a third connecting plate, a scraper is provided on a side of the third connecting plate close to the forming platform, when the forming platform moves to a predetermined position in a height direction of the rack, the third connecting plate is configured to drive the scraper to be inserted between the upper surface of the forming platform and the model, and move along a width direction of the forming platform, thereby gradually separating the model from the forming platform during the movement of the scraper.

9. The 3D printing system of claim 8, **characterized in that**, the forming platform is provided with a groove recessed inwardly along a thickness direction of the forming platform, and the groove extends in a width direction of the forming platform, the scraper is insertable into the groove and configured to move in an extension direction of the groove.

10. The 3D printing system of claim 8, **characterized in that**, the model separate assembly further comprises a third sliding rail and a third sliding block;
the third sliding rail is connected to the base assembly, and the third sliding rail extends in the width direction of the forming platform, the third sliding block is slidably connected to the third sliding rail, and the third connecting plate is fixedly connected to the third sliding block, the third connecting plate is driven to move along an extension direction of the third sliding rail by the third sliding block.

11. The 3D printing system of claim 7, **characterized in that**, further comprising a model push assembly, the model push assembly is connected to the base assembly, the model push assembly comprises a push plate, the push plate is provided on a side of the third connecting plate away from the scraper; when the model is separated from the forming platform, the push plate is movable in the width direction of the forming platform and is configured to push the model away from the forming platform.

12. The 3D printing system of claim 11, **characterized in that**, the model push assembly comprises a first mounting plate, a fourth sliding rail, and a fourth sliding block;
the first mounting plate is connected to the base assembly, the fourth sliding rail is mounted on a side of the first mounting plate close to the forming platform, and the fourth sliding rail extends in the width direction of the forming platform; the fourth sliding block is slidably connected to the fourth sliding rail, the push plate is fixedly connected to the fourth sliding block, and the push plate is driven to move along the width direction of the forming platform by the fourth sliding block, and is configured to push the model away from the forming platform.

13. The 3D printing system of any one of claims 10-12, **characterized in that**, the material container further comprises a storage chamber, the push plate is configured to push the model into the storage chamber.

14. The 3D printing system of claim 1, **characterized in that**, the rack comprises a basal plate and a first sliding assembly;
the basal plate is connected to the base assembly; the first sliding assembly comprises a first sliding block; the first sliding block is slidingly connected to the basal plate, the first sliding block is fixedly connected to the light source assembly; the first sliding block is configured to drive the light source assembly and the release film replacement device to move close to or farther away from the base assembly.

15. The 3D printing system of claim 14, **characterized in that**, the first sliding assembly further comprises a first sliding rail and a third drive member;
the first sliding rail is fixedly connected to the basal plate, and the first sliding rail extends in a height direction along the basal plate; the first sliding block is slidably connected to a side of the first sliding rail away from the basal plate; the third drive member is fixedly connected to the basal plate, and a power output end of the third drive member is connected to the first sliding block, the third drive member is configured to drive the first sliding block to slide along an extension direction of the first sliding rail.

16. The 3D printing system of claim 15, **characterized in that**, the rack further comprises a second sliding assembly, the second sliding assembly comprises a second sliding block, the second sliding block is spaced apart from the first sliding block and is slidingly connected to the basal plate, the second sliding block is configured to be fixedly connected to the forming platform; the second sliding block is configured to drive the forming platform to move close to or farther away from a bottom wall of the material container.

17. The 3D printing system of claim 16, **characterized in that**, the second sliding assembly further comprises a second sliding rail and a fourth drive member;
the second sliding rail is spaced apart from the first sliding rail and fixedly connected to the basal plate, the second sliding rail extends in the height direction of the basal plate; the second sliding block is slidably connected to a side of the second sliding rail back from the basal plate; the fourth drive member is fixedly connected to the basal plate, and a power output end of the fourth drive member is connected to the second sliding block, the fourth drive member is configured to drive the second sliding block to slide along the extension direction of the second sliding rail.

18. A rack, **characterized in that**, the rack comprising:
a basal plate, the basal plate is configured to be fixedly connected to a base assembly;
a first sliding assembly, the first sliding assembly comprises a first sliding block; the first sliding block is slidingly connected to the basal plate, the first sliding block is configured to be fixedly connected to a first mobile assembly; the first sliding block is configured to drive the first mobile assembly to move close to or farther away from the base assembly;
a second sliding assembly, the second sliding assembly comprises a second sliding block, the second sliding block is spaced apart from the first sliding block and is slidingly connected to the basal plate, the second sliding block is configured to be fixedly connected to the forming platform; the second sliding block is configured to drive the forming platform to move close to or farther away from the base assembly.

19. The rack of claim 18, **characterized in that**, the first sliding assembly further comprises a first sliding rail and a third drive member;
the first sliding rail is fixedly connected to the basal plate, and the first sliding rail extends in a height direction along the basal plate; the first sliding block is slidably connected to a side of the first sliding rail away from the basal plate; the third drive member is fixedly connected to the basal plate, and a power output end of the third drive member is connected to the first sliding block, the third drive member is configured to drive the first sliding block to slide along an extension direction of the first sliding rail.

20. The rack of claim 19, **characterized in that**, the first sliding assembly further comprises a first fixing block and a second lifting screw rod;
the first fixing block is fixedly connected to the first sliding block, and the first fixing block is configured for fixedly connecting with the first mobile assembly; one end of the second lifting screw rod is connected to the power output end of the third drive member, and another end of the second lifting screw rod extends through the first fixing block and is threadedly connected with the first fixing block; the third drive member is configured to drive the second lifting screw rod to rotate about an axis of the second lifting screw rod, to drive the first fixing block to slide in an extended direction along the first sliding rail.

21. The rack of claim 19, **characterized in that**, the second sliding assembly further comprises a second sliding rail and a fourth drive member;
the second sliding rail is spaced apart from the first sliding rail and fixedly connected to the basal plate, the second sliding rail extends in the height direction of the basal plate; the second sliding block is slidably connected to a side of the second sliding rail back from the basal plate; the fourth drive member is fixedly connected to the basal plate, and a power output end of the fourth drive member is connected to the second sliding block, the fourth drive member is configured to drive the second sliding block to slide along the extension direction of the second sliding rail.

22. The rack of claim 21, **characterized in that**, the second sliding assembly further comprises a second fixing block and a third lifting screw rod;
the second fixing block is fixedly connected to the second sliding block, and the second fixing block is configured to be fixedly connected to the forming platform; one end of the third lifting screw rod is connected to an power output end of the fourth drive member, and another end of the third lifting screw rod extends through the second fixing block and is threadedly connected with the second fixing block; the fourth drive member is configured to drive the third lifting screw rod to rotate about an axis of the third lifting screw rod, to drive the second fixing block to slide in the extension direction of the second sliding rail.

23. The rack of claim 22, **characterized in that**, the rack further comprises a first limiting member and a second limiting member;
the first limiting member is fixedly connected to the second fixing block, the second limiting member is fixedly connected to a side of the basal plate away from the forming platform; the first limiting member is configured for being driven by the second fixing block to move close to or farther away from the second limiting member; cooperation between the first limiting member and the second limiting member can limit a sliding travel of the second fixing block relative to the second sliding rail.

24. The rack of claim 22, **characterized in that**, the basal plate is provided with a sliding groove extending in the height direction of the basal plate;
the second sliding assembly further comprises a first mounting block, a side of the first mounting block is fixedly connected with a side of the second fixing block back away from the forming platform, the first mounting block is at least partially received within the sliding groove, and is configured for sliding along a groove wall of the sliding groove driven by the second fixing block.

25. The rack of claim 24, **characterized in that**, the rack further comprises one or more second connecting member, the second connecting member comprises a first connecting plate and a second connecting plate connected in sequence, and an angel is formed between the first connecting plate and the second connecting plate; the first connection plate is fixedly connected to the side of the second fixing block away from the first mounting block, and the second connection plate is configured to carry the forming platform and is fixedly connected to the forming platform.

26. The rack of claim 25, **characterized in that**, number of the second connecting member is at least two, and at least two second connecting members are provided spaced apart along the width direction of the basal plate.

27. A demolding device, **characterized in that** the demolding device comprising:
a forming platform, the forming platform is slidably connected to a rack, the forming platform enables printing material to be molded layer by layer on an upper surface of the forming platform to form a model;
a model separate assembly, the model separate assembly is configured to connect a base assembly, the model separate assembly comprises a third connecting plate, a scraper is provided on a side of the third connecting plate close to the forming platform, when the forming platform moves to a predetermined position in a height direction of the rack, the third connecting plate is configured for driving the scraper to be inserted between the upper surface of the forming platform and the model, and move along a width direction of the forming platform, the model is gradually separated from the forming platform during the movement of the scraper.
a model push assembly, the model push assembly is configure to connect the base assembly, the model push assembly comprises a push plate, the push plate is provided on a side of the third connecting plate away from the scraper; when the model is separated from the forming platform, the push plate is configured for moving in the width direction of the forming platform and push the model away from the forming platform.

28. The demolding device of claim 27, **characterized in that**, the model push assembly comprises a first mounting plate, a fourth sliding rail, and a fourth sliding block;
the first mounting plate is configured to connect the base assembly, the fourth sliding rail is mounted on a side of the first mounting plate close to the forming platform, and the fourth sliding rail extends in the width direction of the forming platform; the fourth sliding block is slidably connected to the fourth sliding rail, the push plate is fixedly connected to the fourth sliding block, the push plate is configured for moving along the width direction of the forming platform under a driving of the fourth sliding block, and push the model away from the forming platform.

29. The demolding device of claim 28, **characterized in that**, the model push assembly further comprises a sixth drive member, the sixth drive member is fixedly connected to the first mounting plate, a power output end of the sixth drive member extends through the first mounting plate and is connected to the fourth sliding block, and the sixth drive member is configured to drive the fourth sliding block along the extension direction of the fourth sliding rail.

30. The demolding device of claim 29, **characterized in that**, the model push assembly further comprises a mounting shaft, a fourth driving synchronous wheel, a second bearing, and a fourth synchronous belt;
the mounting shaft is mounted to the first mounting plate, and the mounting shaft is spaced apart from the power output end of the sixth drive member; the fourth driving synchronous wheel is set and fixed to the power output end of the sixth drive member; the second bearing is set and fixedly connected to the mounting shaft; the fourth driving synchronous wheel and the second bearing is configured for tensioning the fourth synchronous belt and drive the fourth synchronous belt to make a closed loop movement in a second direction; the fourth slider is fixedly connected to the fourth synchronous belt.

31. The demolding device of claim 27, **characterized in that**, the model separate assembly further comprises a third sliding rail and a third sliding block;
the third sliding rail is connected to the base assembly, and the third sliding rail extends in the width direction of the forming platform, the third sliding block is slidably connected to the third sliding rail, and the third connecting plate is fixedly connected to the third sliding block, the third connecting plate is configured for being moved along an extension direction of the third sliding rail under a driving of the third sliding block.

32. The demolding device of claim 31, **characterized in that**, the model separate assembly further comprises a fifth drive member, the fifth drive member is configured to be fixedly connected with the base assembly, a power output end of the fifth drive member is connected with the third sliding block, the fifth drive member is configured for driving the third sliding block to slide along the extension of the third sliding rail.

33. The demolding device of claim 32, **characterized in that**, the model separate assembly further comprises one or more reciprocating screw rod, one end of the reciprocating screw rod is connected to the power output end of the fifth drive member, and another end of the reciprocating screw rod extends through and is threadedly connected to the third sliding block, the fifth drive member is configured to drive the reciprocating screw rod to rotate around an axis of the reciprocating screw rod, driving the third sliding block to slide along the extension direction of the third sliding rail.

34. The demolding device of claim 33, **characterized in that**, number of the reciprocating screw rod is two, two reciprocating screw rods are provided spaced apart along the length direction of the forming platform on both sides of the forming platform;
the model separate assembly further comprises a third driving synchronous wheel, a third driven synchronous wheel, and a third synchronous belt; the third driving synchronous wheel is spaced apart from the third driven synchronous wheel, the third driving synchronous wheel is set and fixed to the power output end of the fifth drive member, and the third driving synchronous wheel is set and fixed to an end of one of the two reciprocating screw rods; the third driven synchronous wheel is configured to connect with the base assembly, and the third driven synchronous wheel is fixed to one end of another one of the two reciprocating screw rods, the third driving synchronous wheel and the third driven synchronous wheel are configured for tensioning the third synchronous belt and driving the third synchronous belt to make a closed-loop movement in a third direction.

35. The demolding device of any one of claims 27-34, **characterized in that**, the demolding device further comprising a third limiting member and a fourth limiting member;
the third limiting member is fixedly connected to the third connecting plate, the fourth limiting member is configured to be mounted on the base assembly, the third limiting member is configured for being driven by the third connecting plate to move close to or farther away from the fourth limiting member; cooperation between the third limiting member and the fourth limiting member is configured for limiting a sliding travel of the third connecting plate relative to the forming platform.
